# FASCICULE DE BREVET EUROPEEN

(11) **EP 0 341 175 B1**
(45) Date de publication et mention de la délivrance du brevet: **24.11.1993**
(21) Numéro de dépôt: 89440038.1
(22) Date de dépôt: 03.05.1989
(51) Int. Cl.: H04L 12/28, G06F 5/06

(54) **Réseau local de communications à accès multiples par régulation distribuée de trafic**
Mehrfachzugriff durch verteilte Verkehrssteuerung in einem lokalen Nachrichtennetz
Multiple access by distributed traffic control in a local area communication network

(30) Priorité: 06.05.1988 FR 8806333; 01.06.1988 FR 8807474
(43) Date de publication de la demande: 08.11.1989
(73) Titulaire: Sabourin, Hervé Jean Francois, F-67000 Strasbourg (FR)
(72) Inventeur: Sabourin, Hervé Jean Francois, F-67000 Strasbourg (FR)
(74) Mandataire: Metz, Paul

(56) Documents cités:
- EP-A- 0 003 493
- EP-A- 0 205 948
- FR-A- 2 379 953
- A.S. TANENBAUM: "Operating systems: Design and implementation", 1987, pages 58-60, Prentice-Hall International, Inc.
- ELECTRONICS DESIGN, vol. 34, no. 18, 7 août 1986, pages 104-106,108,109, Hasbrouck Heights, NJ, US; J. O'BRIEN et al.: "FIFO registers waste no time refereeing data transfers"
- IBM TECHNICAL DISCLOSURE BULLETIN, vol. 24, no. 1A, juin 1981, pages 213-215, New York, US; N.H. MacLEAN Jr.: "Buffer memory addressing"
- IBM TECHNICAL DISCLOSURE BULLETIN, vol. 26, no. 4, septembre 1983, pages 1865-1869, New York, US; C.S. LANIER et al.: "Bandwidth usage in peer-to-peer closed rings"
- FIFTH ANNUAL INTERNATIONAL PHOENIX CONFERENCE ON COMPUTERS AND COMMUNICATIONS, Scottsdale, Arizona, 26-28 mars 1986, pages 298-305, IEEE Computer Society, New York, US; S. BEDERMAN: "Ring multiple access protocol based on collisions"
- IEE PROCEEDINGS A à I, vol. 131, no. 2, partie H, avril 1984, pages 83-86, Old Woking, Surrey, GB; F. ABDUL-GHANI et al.: "High-speed optical-fibre ring network with a register insertion access protocol"

## Description

La présente invention concerne un réseau local de communications, ayant une architecture en couches, constitué de *N* stations, *N ≧* 2, émettrices et réceptrices. Chacune des stations est raccordée par un câble d'attachement à une unité d'attachement. Ces unités d'attachement sont reliées l'une à l'autre, en série, par un milieu de transmission, constituant ainsi un anneau. Le milieu de transmission comporte une voie de transmission de données unidirectionnelle et une voie de signalisation. Chacune des unités d'attachement comporte des moyens qui, d'une part, lorsque la station est passive (hors tension) déconnectent la dite station de l'anneau, d'autre part, lorsque la dite station est active (sous tension) insèrent la dite station dans l'anneau, via le câble d'attachement.

Le comité IEEE de l' "Institut of Electrical and Electronic Engineers" a adopté en 1980, dans le cadre du projet 8802 de l'ISO, un modèle d'architecture pour les réseaux locaux qui s'insère dans le modèle de référence pour l'interconnexion des systèmes ouverts au niveau des couches "Physique", "Liaison de données" et "Réseau". La couche "Liaison de données" est décomposée en deux sous-couches :
- La sous-couche de "Contrôle de Lien Logique" (LLC) indépendante du milieu de transmission,
- La sous-couche de "Contrôle d'Accès au Milieu" (MAC) dépendante du milieu de transmission.

Les services fournis par la sous-couche "Contrôle de Lien Logique" (LLC) à la couche "Réseau", permettant à une entité réseau d'échanger des informations avec une ou plusieurs autres entités réseau, sont le service sans connexion et les services orientés connexion.

Le service sans connexion permet d'échanger des "Unités de Données du Service Liaison" (LSDU) entre une entité réseau locale et une ou plusieurs entités réseau éloignées, en mode point à point, distribué ou diffusé, sans établir préalablement une connexion entre les couches "Liaison de Données".

Les services orientés connexion permettent d'établir, d'utiliser, de réinitialiser et de terminer des connexions point à point entre des "Points d'Accès du Service Liaison" (LSAP).
- Le "service d'établissement de connexion", permet à une entité réseau de demander ou d'être avertie de l'établissement d'une connexion avec une couche de "Liaison de Données" éloignée.
- Le "service de transfert de données orienté connexion" permet d'échanger des "Unités de Données du Service de Liaison" (LSDU) entre deux entités réseau au travers d'une connexion. Ce service assure le séquencement des données, le contrôle de flux et les recouvrements d'erreurs.
- Le "service de réinitialisation de connexion" permet de remettre une connexion dans son état initial.

Le modèle d'architecture pour les réseaux locaux a permis de normaliser, dans un premier temps, trois méthodes d'accès dont les caractéristiques, les formats et les protocoles sont définis dans la sous-couche de "Contrôle d'Accès au Milieu" (MAC) et la couche "Physique". Ces méthodes sont connues comme étant : ISO 8802.3 "CSMA/CD", ISO 8802.4 "Bus à jeton", ISO 8802.5 "Anneau à jeton".

La méthode d'accès "CSMA/CD" a été définie pour des stations raccordées à un câble coaxial appelé bus. La technique de transmission est en bande de base, le plus souvent à 10 Mégabits/seconde.

Quand une station a une trame à émettre, elle s'assure que le bus est disponible. Si c'est le cas, elle émet sa trame, sinon, elle diffère sa transmission. Lorsqu'une trame est émise sur le bus, toutes les stations se synchronisent sur son préambule. Chaque station contrôle l'adresse de destination de la trame afin de savoir si elle lui est destinée, si c'est le cas, la trame est acceptée et contrôlée.

Si plusieurs stations essaient d'émettre à un moment donné, les trames émises peuvent interférer : il y a collision. Suite à une collision, chaque station calcule un délai aléatoire d'attente pour retransmettre. Si au bout de 16 retransmissions d'une même trame, il y a toujours collision, les essais sont abandonnés et l'erreur est reportée.

La méthode d'accès "bus à jeton" a été définie pour des stations raccordées à un câble coaxial ou plusieurs câbles coaxiaux arborescents, appelés bus. La technique de transmission est en bande de base ou large bande, le plus souvent à 10 Mégabits/seconde.

Les stations accèdent à tour de rôle au bus. Une station obtient le droit d'émettre lorsqu'elle reçoit le jeton. La ou les trames qu'elle émet sont reçues par toutes les autres stations. Chaque station contrôle l'adresse de destination des trames afin de savoir si elles lui sont destinées. Lorsque la station a terminé d'émettre, elle passe le jeton à la station suivante d'adresse immédiatement inférieure. La suite des stations parcourues par le jeton constitue un anneau logique.

L'anneau logique doit être maintenu chaque fois qu'une station s'insère ou se retire de l'anneau. Pour cela, après avoir transmis le jeton, la station s'assure qu'une trame est émise par la station suivante. Si ce n'est pas le cas, elle amorce une procédure de recouvrement avec les stations éligibles comme successeur pour rétablir l'anneau logique.

La méthode d'accès "Anneau à jeton" a été définie pour plusieurs stations raccordées les unes aux autres en série, par un câble constitué d'une paire de fils téléphoniques torsadées et blindées. La technique de transmission est en bande de base à 4 ou 16 Mégabits/seconde.

Les stations accèdent à tour de rôle à l'anneau. Une station obtient le droit d'émettre lorsqu'elle détecte le jeton sur l'anneau. Si elle a des données à émettre, elle capture le jeton et émet une ou plusieurs trames en séquence. Toutes les autres stations actives répètent chaque bit qu'elles recoivent. La station destinataire copie les trames à leur passage. Lorsque les trames reviennent à la station de départ, celle-ci les retire de l'anneau et émet un nouveau jeton après avoir reçu la dernière trame en retour.

Une station moniteur surveille la présence et l'unicité du jeton. Si la station moniteur vient à défaillir toutes les autres stations sont éligibles pour devenir station moniteur.

Les méthodes d'accès "CSMA/CD", "bus à jeton" et "anneau à jeton", bien que simple dans leur principe, conduisent à des réalisations complexes.

De plus, le délai de transfert d'une trame étant le délai entre sa génération et son acheminement correct a destination, il ressort dans les trois méthodes que le temps moyen de transfert des trames se dégrade rapidement avec le nombre de stations actives.

La méthode d'accès "CSMA/CD" basée sur l'utilisation de délais de retransmission aléatoires conduit à des interfaces physiques complexes. Plus le débit d'informations s'intensifie sur le bus, plus les risques de collisions deviennent importants. Le délai moyen de transfert des trames s'en trouve fortement dégradé.

La méthode d'accès "bus à jeton" est fondée sur un protocole de partage de temps équitable du milieu de transmission. Elle présente néanmoins l'inconvénient, lors de l'insertion de stations ou lors de la perte du jeton, d'avoir des procédures particulièrement complexes pour maintenir l'anneau logique et pour remettre un jeton en circulation. Le rendement du milieu de transmission, mesuré en débit utile rapporté au débit nominal du niveau physique, est meilleur que dans la méthode "CSMA/CD"; néanmoins le délai moyen de transfert des trames se dégrade avec le nombre des stations actives.

La méthode d'accès "anneau à jeton" est fondée également sur un protocole de partage de temps équitable du milieu de transmission. Elle a, de même, en cas de perte du jeton ou de défaillance de la station moniteur, des procédures complexes pour remettre en circulation un jeton ou pour élire une nouvelle station moniteur. Ses performances sont analogues à celles du bus à jeton.

Un procédé de communication et un réseau local permettant une régulation distribuée du trafic de sorte que les stations traitées d'égale à égale accédent simultanément à la voie de données, ceci correspondant ause caractéristiques des préambules respectifs des revendications 1 et 7, sont tous deuse décrits dans FR-A-2 379 953.

La présente invention a pour objectif de construire un réseau local de communications dans lequel les stations, traitées d'égale à égale, disposent de moyens simples d'accès au milieu qui assurent un meilleur rendement du milieu et des délais moyens de transfert des trames plus courts que ceux obtenus par les méthodes d'accès actuellement utilisées.

La présente invention, pour atteindre ces objectifs, met en oeuvre dans le réseau local de communications considéré, des moyens et des procédés d'accès au milieu de transmission, identiques dans chacune des stations, permettant aux stations actives d'accéder de manière contrôlée, simultanément et sans conflit au milieu de transmission conformément à un protocole de multiplexage, inconnu jusqu'alors dans l'art antérieur; le dit protocole se décrivant comme suit :
- chacune des stations actives *S*_{*i*}, 1 ≦ *i* ≦ *k*, avec 2 ≦ *k* ≦ *N,* lorsqu'elle n'a pas de trame à émettre, régénère et retransmet vers la station active suivante, désignée par *S*_{*i*}₊₁, un à un, les bits des trames au fur et à mesure que ceux-ci arrivent de la station active précédente, désignée par *S*_{*i-*}₁*.* La dite station *S*_{*i*} est alors dans l'état "fermé".
- chacune des stations actives *S*_{*i*}*,* 1 ≦ *i* ≦ *k*, dans l'état "fermé", marque à détruire, à leur passage, les trames valides destinées uniquement à la dite station *S*_{*i*} ou émises par la dite station *S*_{*i*}*.*
- chacune des stations actives *S*_{*i*}*,* 1 ≦ *i ≦ k,* dans l'état "fermé", peut émettre une trame, appelée *trame propre*, émanant de la sous-couche de "Contrôle de Lien Logique" (LLC) ou de la sous-couche de "Contrôle d'Accès au Medium" (MAC), entre le passage de deux trames successives venant de la station *S*_{*i-*}₁*.*
- chacune des stations actives *S*_{*i*}*,* 1 ≦ *i ≦ k,* lorsqu'elle a au moins une trame en attente d'émission et le droit d'émettre, invalide la retransmission bit par bit, vers la station *S*_{*i*}₊₁, des trames venant de la station *S*_{*i*}₋₁. La dite station *S*_{*i*} continue à réceptionner les trames venant de la station *S*_{*i*}₋₁ et retransmet, dès que possible, vers la station *S*_{*i*}₊₁ les trames, appelées *trames en transit*, qui ne lui sont pas destinées ou uniquement destinées. La station *S*_{*i*} est alors dans l'état "ouvert".
- chacune des stations actives *S*_{*i*}, 1≦*i≦k*, dans l'état "ouvert", accepte au plus un nombre *n*_{*i*}(*t*) de trames en transit, le dit nombre *n*_{*i*}(*t*), appelé *capacité nominale de transit* de la station *S*_{*i*} étant un paramètre d'exploitation de la station *S*_{*i*} vérifiant *n*_{*i*}(*t*) ≧ 3.
- chacune des stations actives *S*_{*i*}, 1≦*i*≦*k,* dans l'état "ouvert", fournit un signal, sur la voie de signalisation, à la station *S*_{*i*}₋₁, de sorte que, premièrement, lorsque la capacité de réception des trames en transit, appelée *capacité de transit* de la station *S*_{*i*}, tombe à une trame, le dit signal est un signal de niveau haut, obligeant la dite station *S*_{*i*}₋₁ à suspendre ses émissions et à passer dans l'état "ouvert", deuxièmement, lorsque la dite capacité de transit de la station *S*_{*i*}, remonte à deux trames, le dit signal est un signal de niveau bas autorisant la dite station *S*_{*i-*}₁ à reprendre ses émissions et à passer dans l'état "fermé".
- chacune des stations actives *S*_{*i*}, 1≦*i*≦*k*, lorsque le signal émis par la station *S*_{*i*}₊₁, sur la voie de signalisation, est un signal de niveau haut, invalide ses émissions, sans interrompre l'émission éventuellement en cours et passe dans l'état "ouvert" au plus tard dès que cette émission en cours se termine. Par contre, lorsque le dit signal est un signal de niveau bas, la station *S*_{*i*} reprend ses émissions.
- chacune des stations actives *S*_{*i*}, 1 ≦ *i* ≦ *k,* dans l'état "ouvert", lorsqu'elle n'est pas suspendue par la station *S*_{*i*}₊₁, émet une trame propre uniquement si le nombre de trames en transit supplémentaires, qu'elle peut accepter est supérieur ou égal à son *seuil d'émission m*_{*i*}(*t*), le dit seuil d'émission *m*_{*i*}(*t*) étant un paramètre d'exploitation de la station *S*_{*i*} vérifiant 3≦*m*_{*i*}(*t*)≦*n*_{*i*}(*t*).
- chacune des stations actives *S*_{*i*}, 1 ≦ *i ≦ k,* dans l'état "ouvert", lorsqu'elle n'est pas suspendue par la station *S*_{*i*}₊₁ et lorsqu'elle n'a plus de trame, en transit ou non, à émettre, passe dans l'état "fermé".
- chacune des stations actives *S*_{*i*}, 1 ≦ *i* ≦ *k,* dans l'état "ouvert", lorsqu'elle est suspendue par la station *S*_{*i*}₊₁, tandis qu'elle suspend la station *S*_{*i*}₋₁, détruit au bout d'un délai, appelé *délai d'interblocage,* ses trames en transit, le dit délai d'interblocage étant fonction du nombre *N*, *N*≧2, de stations et du temps de transmission de la trame la plus longue.
- chacune des stations actives *S*_{*i*}, 1≦*i*≦*k*, affecte une durée de vie aux trames qu'elle génère.
- chacune des stations actives *S*_{*i*}, 1≦*i*≦*k*, à l'état "ouvert" diminue la *durée de vie* des trames en transit.
- chacune des stations actives *S*_{*i*}, 1≦*i*≦*k*, détruit, entre autres, les trames erronées, les trames émises par elle, les trames déclarées à détruire, et les trames dont la durée de vie est nulle.
- chacune des stations actives *S*_{*i*}, 1≦*i*≦*k*, détecte et comptabilise les erreurs de transmission.

La présente invention permet à plusieurs stations actives de communiquer simultanément. Dans la mesure où les chemins suivis par les trames émises, à un même moment, par des stations différentes, ne se recoupent pas ou se recoupent partiellement, le délai moyen de transfert des trames s'en trouve amélioré. Dans l'hypothèse où les chemins suivis par les trames se recoupent fortement, le temps moyen de transfert de ces trames est comparable à celui des méthodes d'accès bus à jeton et anneau à jeton. De plus, l'accès au milieu ne nécessitant pas la gestion d'un jeton, le rendement du milieu n'en est que meilleur.

La présente invention définie une sous-couche de "Contrôle d'Accès au Milieu" (MAC) compatible avec la sous-couche de "Contrôle de Lien Logique" (LLC) du modèle d'architecture pour les réseaux locaux élaboré par l'IEEE.

La réalisation d'un réseau local de communications conforme à l'invention comporte bien d'autres avantages. Ces avantages seront mis en évidence en décrivant un mode de réalisation d'un réseau conforme à l'invention.

Les dessins et schémas annexés illustrent un tel mode de réalisation.

Le fonctionnement du réseau et le format des trames sont décrits à l'aide des figures suivantes.

La figure 1 montre le schéma physique du réseau local de communications considéré.

La figure 2a représente, pour chacune des stations actives *S*_{*i*}, 1≦*i*≦*k*, la matrice des transitions d'états du couple serveur-usager *C*(*s*_{*i*}(*r*), *u*_{*i*}(*r*)).

La figure 2b représente, pour chacune des stations actives *S*_{*i*}, 1≦*i*≦*k*, les entrées et les sorties du circuit séquentiel *E*(*s*_{*i*}(*r*), *u*_{*i*}(*r*)).

La figure 3a représente, pour chacune des stations actives *S*_{*i*}, 1≦*i*≦*k,* la matrice des transitions d'états du couple serveur-usager *C*(*s*_{*i*}(*e*), *u*_{*i*}(*e*)).

La figure 3b représente, pour chacune des stations actives *S*_{*i*}, 1≦*i*≦*k*, les entrées et les sorties du circuit séquentiel *E*(*s*_{*i*}*(e*), *u*_{*i*}(*e*)).

La figure 4a représente, pour chacune des stations actives *S*_{*i*}, 1≦*i*≦*k*, la matrice des transitions d'états du couple serveur-usager *C*(*s*_{*i*}(*t*), *u*_{*i*}(*t*)).

La figure 4b représente, pour chacune des stations actives *S*_{*i*}, 1≦*i*≦*k*, les entrées et les sorties du circuit séquentiel *E*(*s*_{*i*}*(t*), *u*_{*i*}(*t*)).

La figure 5 décrit l'architecture de chacune des stations actives *S*_{*i*}, 1≦*i*≦*k*.

La figure 6a décrit, pour chacune des stations actives *S*_{*i*}, 1≦*i*≦*k*, le format des trames générées par le serveur *S*_{*i*}(*e*) et le coupleur de communications.

La figure 6b décrit, pour chacune des stations actives *S*_{*i*}, 1≦*i*≦*k*, le format des trames vides, générées par le coupleur de communications.

La figure 7 décrit, pour chacune des stations actives *S*_{*i*}, 1≦*i*≦*k*, les moyens lui permettant de passer alternativement dans l'état "ouvert" et l'état "fermé".

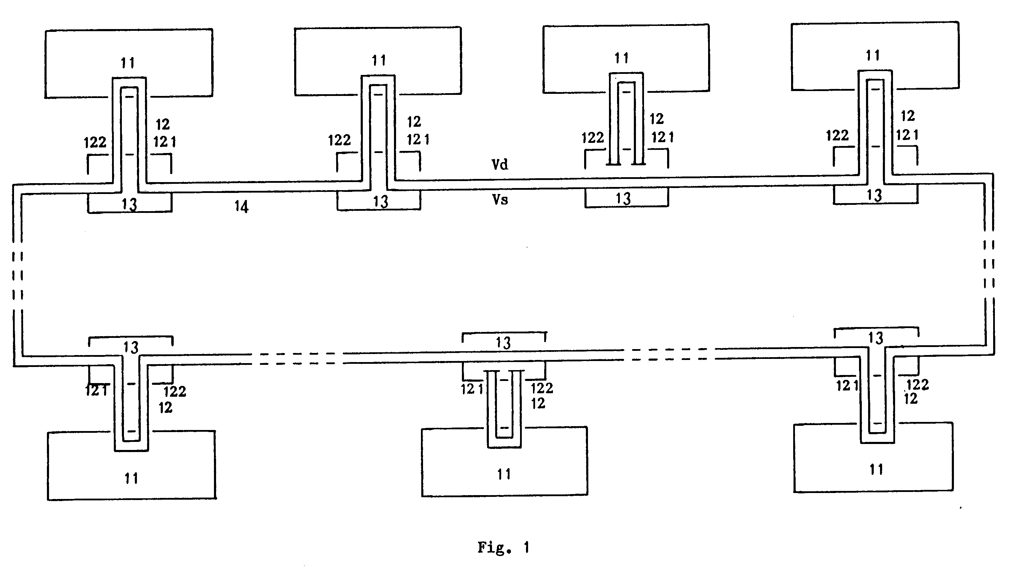

La **figure 1** montre le schéma physique du réseau local de communications considéré qui est composé d'éléments bien connus de l'homme de l'art : les stations (11), les câbles d'attachement (12), les unités d'attachement (13) et le milieu de transmission (14).
- Le réseau local de communications considéré comporte une pluralité de stations; soit *N* le nombre de ces stations, avec *N≧*2. Ces stations peuvent être des équipements de traitement de données, de stockage de données, d'edition, des postes de travail interactifs et autres équipements analogues.
- Chacune des stations (11) est raccordée par un câble d'attachement (12) à une unité d'attachement (13). Les unités d'attachement sont reliées l'une à l'autre en série par un milieu de transmission (14), constituant ainsi un anneau. Le milieu de transmission comporte une voie de transmission de données (*Vd*) unidirectionnelle et une voie de signalisation (*Vs*). Dans la forme de réalisation considérée la voie de transmission de données et la voie de signalisation sont constituées l'une et l'autre par une paire de fils téléphoniques torsadées et blindées. L'homme de l'art notera que d'autres milieux de transmission peuvent être utilisés, notamment, la fibre optique.
- Chacun des câbles d'attachement (12) comporte un milieu de transmission aller (121) et un milieu de transmission retour (122) constitués l'un et l'autre d'une voie de transmission de données et d'une voie de signalisation. Dans la forme de réalisation considérée chacune des 4 voies est constituée par une paire de fils téléphoniques torsadées et blindées.
- Chacune des unités d'attachement (13) comporte des dispositifs de commutation bien connus de l'homme de l'art qui, premièrement, lorsque la station est *passive*, c'est-à-dire hors tension, isolent la station de l'anneau en établissant la jonction entre le milieu de transmission venant de la station précédente et celui allant vers la station suivante, deuxièmement, lorsque la station est *active*, c'est-à-dire sous tension, insèrent la station dans l'anneau en établissant la jonction des milieux aller et retour du câble de jonction avec respectivement le milieu venant de la station précédente et le milieu allant vers la station suivante.
- Chacune des stations (11) comporte des dispositifs de réception et d'émission bien connus de l'homme de l'art qui assurent le transfert série synchrone, en bande de base, à grande vitesse, des signaux binaires de données. Les blocs de données ainsi transmis sont appelés des *trames*. Dans la forme de réalisation considérée, la vitesse est de 10 Mégabits/seconde, mais cette vitesse n'est pas limitative, de plus, chacune des stations comporte des moyens de réception qui, lorsqu'elle reçoit une trame, premièrement, reconnaissent et suppriment les octets des champs de préambule, deuxièmement, identifient les champs d'adresse destination et d'adresse source et contrôlent le champ du code de redondance polynomiale, troisièmement, régénèrent, éventuellement modifient et retransmettent vers la station active suivante, désignée par *S*_{*i*}₊₁, à la demande, un à un les bits des trames au fur et à mesure que les dits bits arrivent de la station active précédente, désignée par *S*_{*i*}₋₁, de plus, chacune des stations comporte des moyens d'émission qui génèrent automatiquement, entre autres, lors de l'émission d'une trame, les champs de code de redondance polynomiale et de délimiteur de fin de trame.

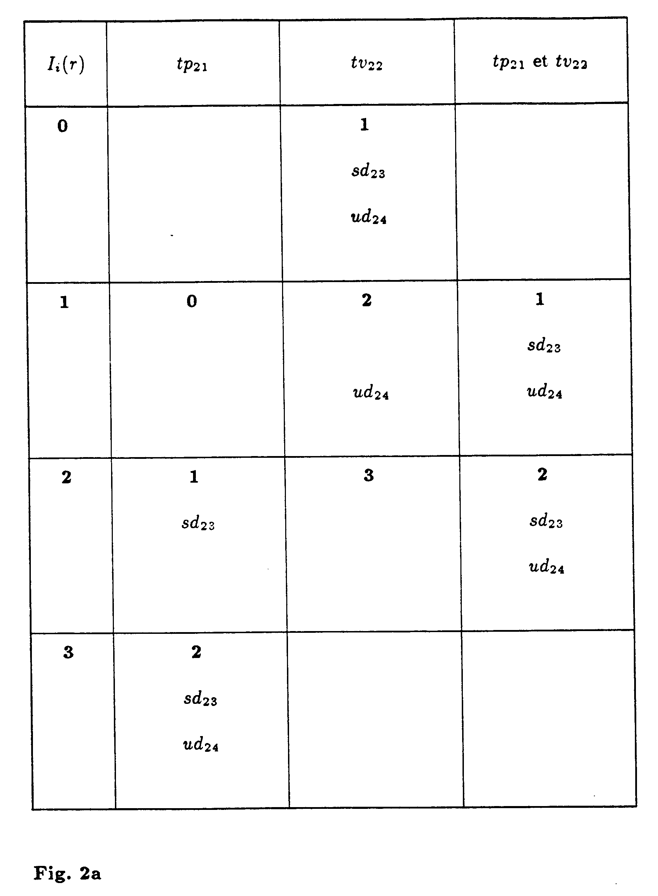

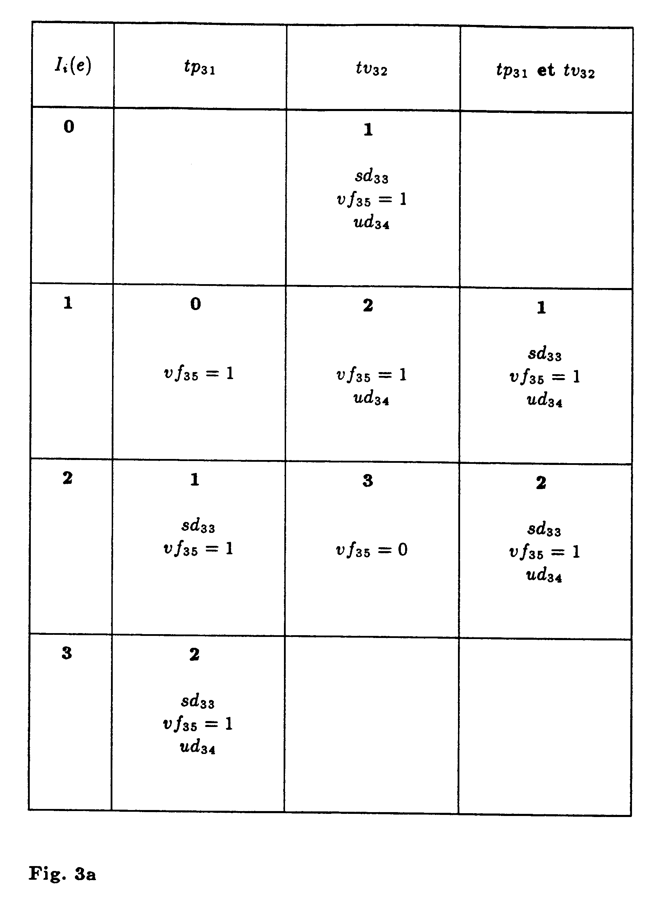

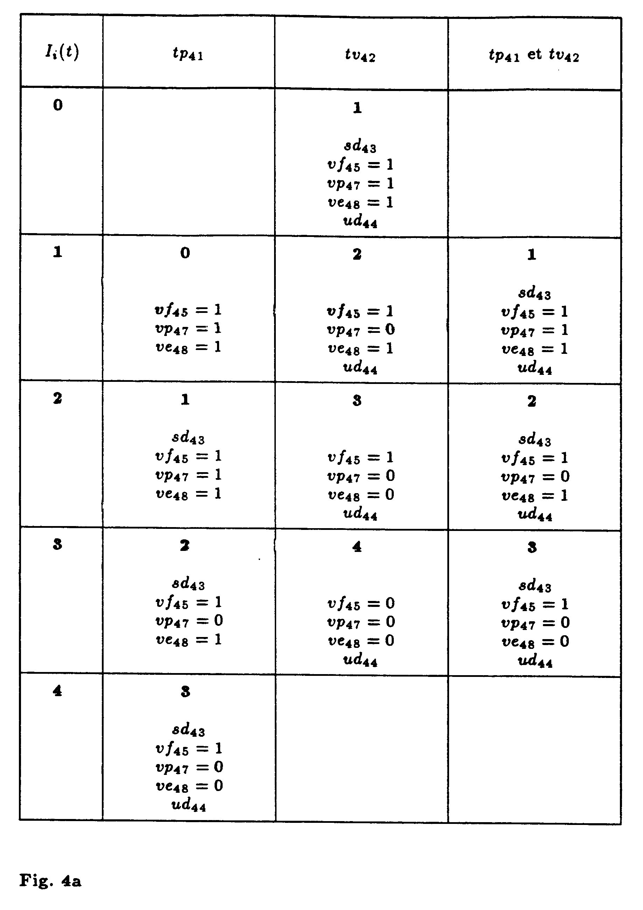

La **figure 2a** représente pour chacune des stations actives *S*_{*i*}, 1≦*i*≦*k*, avec 2≦*k*≦*N*, la matrice des transitions d'états d'un processus serveur et d'un processus usager, appelés respectivement *serveur* et *usager*, désignés par *C*(*s*_{*i*}(*r*), *u*_{*i*}(*r*)) qui partagent *n*_{*i*}(*r*), *n*_{*i*}(*r*) ≧ 2, mémoires tampons, appelées *tampons,* pour assurer les fonctions de réception des trames venant de la station *S*_{*i*}₋₁, à destination de la station *S*_{*i*}. Le nombre de tampons *n*_{*i*}(*r*) est un paramètre d'exploitation. Dans la forme de représentation considérée *n*_{*i*}(*r*) égale 3.

Chacun des deux processus qui se déroulent sur des processeurs distincts, résulte de la répétition intermittente d'un processus élémentaire. Le processus élémentaire du serveur *s*_{*i*}(*r*) se résume à remplir un tampon avec une trame, venant de la station *S*_{*i*}₋₁, à destination de la station *S*_{*i*}, et à le libérer, tandis que le processus élémentaire de l'usager *u*_{*i*}(*r*) se résume à vider un tampon en remettant la trame qu'il contient à la sous-couche de "Contrôle de Lien Logique" ou la sous-couche de "Contrôle d'Accès au Milieu" et à le libérer. Un processus est dit:
- *en éveil* pendant toute la durée d'un processus élémentaire,
- *en sommeil* entre deux processus élémentaires,
- *demandé* chaque fois qu'un tampon est mis à sa disposition pendant son sommeil.

Les libérations et les attributions des tampons réservés au serveur et à l'usager, entraînant ou non leurs réveils, immédiats ou non, définissent des événements appelés *événements intrinsèques*. Ces événements se désignent par "*tampon plein*"(*tp*₂₁) et "*serveur demandé*"(*sd*₂₃) pour le serveur, par "*tampon vide*"(*tv*₂₂) et "*usager demandé*"(*ud*₂₄) pour l'usager.

Lorsqu'un processus libère un tampon, en fait, il le met à la disposition du processus concurrent. Par conséquent, pour procéder aux réveils du serveur et/ou de l'usager lorsqu'ils sommeillent, il faut tenir à jour, à l'issue de chaque événement "*tampon plein*" et "*tampon vide*", les nombres de tampons qui sont respectivement à leur disposition. La somme des deux nombres étant constante, la connaissance de l'un d'eux est suffisante.

Le nombre de tampons à la disposition du serveur, à l'issue d'un événement "*tampon plein*" ou "*tampon vide*", définit un état intrinsèque du couple serveur-usager *C*(*s*_{*i*}(*r*), *u*_{*i*}(*r*)). Celui-ci a ainsi *n*_{*i*}(*r*)+1, *n*_{*i*}(*r*)≧2, états intrinsèques possibles. L'état initial est égal à *n*_{*i*}(*r*), sachant qu'à l'initialisation, le serveur *s*_{*i*}(*r*) est réveillé et l'usager *u*_{*i*}(*r*) est en sommeil. Soit *I*_{*i*}(*r*) la variable qui enregistre les états intrinsèques.

Dans la matrice des transitions d'états de la figure 2a chaque ligne correspond à an état intrinsèque. Une des colonnes correspond aux événements "*tampon plein*", une autre aux événements "*tampon vide*" et la dernière aux événements simultanés "*tampon plein*" et "*tampon vide*".

L'intersection d'une ligne et d'une colonne traduit, pour un état intrinsèque donné et un événement ou deux événements simultanés, l'état intrinsèque successeur avec éventuellement la demande de réveil du serveur et/ou la demande de réveil de l'usager.
- A l'issue d'un événement "*tampon plein*", l'état intrinsèque courant est diminué de 1. Si l'état successeur est nul, le serveur, n'ayant plus de tampon, reste en sommeil. Par contre, si l'état successeur est positif, l'événement "*serveur demandé*" est déclenché, car le serveur dispose au moins d'un tampon. De plus, si l'état successeur est égal à *n*_{*i*}(*r*)-1, l'événement *"usager demandé"* est également déclenché, car l'usager était en attente d'un tampon.
- Au contraire, à l'issue d'un événement *"tampon vide"*, l'état intrinsèque courant est augmenté de 1. Si l'état successeur est égal à *n*_{*i*}(*r*), l'usager, n'ayant plus de tampon, reste en sommeil. Par contre, si l'état successeur est inférieur à *n*_{*i*}(*r*), l'événement *"usager demandé"* est déclenché. De plus, si l'état successeur est égal à 1, l'événement *"serveur demandé"* est également déclenché, car le serveur était en attente d'un tampon.
- A l'issue d'un événement *"tampon plein"* et d'un événement *"tampon vide"* simultanés, les événements *"serveur demandé"* et *"usager demandé"* sont déclenchés. L'état intrinsèque reste inchangé.

L'homme de l'art notera que la matrice des transitions d'états de la figure 2a est réalisable par un circuit séquentiel (un événement correspondant à une impulsion d'entrée ou de sortie).

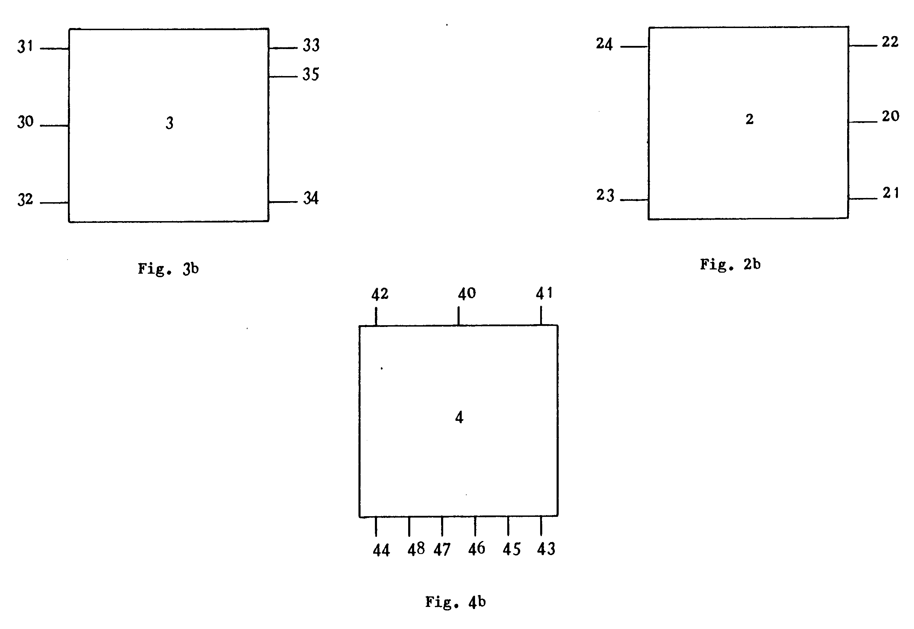

La **figure 2b** représente, pour chacune des stations actives *S*_{*i*}, 1≦*i≦k,* les entrées et les sorties d'un circuit séquentiel (2), désigné par *E*(*s*_{*i*}(*r*), *u*_{*i*}(*r*)) qui réalise la matrice des transitions d'états du couple serveur-usager *C*(*s*_{*i*}(*r*), *u*_{*i*}(*r*)). Le dit circuit séquentiel est un circuit susceptible de prendre *n*_{*i*}(*r*) +1 états, *n*_{*i*}(*r*) ≧ 2, sous l'effet d'impulsions, simultanées ou non, soumises à deux entrées (21, 22). Les impulsions soumises à l'une des entrées (21) sont conformes aux événements *"tampon plein"*; tandis que celles soumises à l'autre entrée (22) sont conformes aux événements *"tampon vide"*. Chaque changement d'état fournit ou non des impulsions sur deux sorties (23, 24). Les impulsions fournies à l'une des sorties (23) correspondent aux événements *"serveur demandé"*; tandis que celles fournies sur l'autre sortie (24) correspondent aux événements *"usager demandé".*

De plus, le circuit séquentiel *E*(*s*_{*i*}(*r*), *u*_{*i*}(*r*)) comprend une entrée (20) pour être initialisé dans l'état *I*_{*i*}(*r*) égale à *n*_{*i*}(*r*). Lors de l'initialisation, une impulsion est fournie sur la sortie (23) pour demander le serveur *s*_{*i*}(*r*).

La **figure 3a** représente pour chacune des stations actives *S*_{*i*}, 1 < *i* < *k*, la matrice des transitions d'états d'un processus serveur et d'un processus usager, désignés par *C*(*s*_{*i*}(*e*), *u*_{*i*}(*e*)) qui partagent *n*_{*i*}(*e*), *n*_{*i*}(*e*) ≧ 2, tampons, pour assurer les fonctions d'émission des trames élaborées par la station *S*_{*i*} à diriger vers la station *S*_{*i*}₊₁. Le nombre de tampons *n*_{*i*}(*e*) est un paramètre d'exploitation. Dans la forme de représentation considérée *n*_{*i*}(*e*) égale 3.

Chacun des deux processus qui se déroulent sur des processeurs distincts, résulte de la répétition intermittente d'un processus élémentaire. Le processus élémentaire du serveur *s*_{*i*}(*e*) se résume à remplir un tampon avec une trame propre et à le libérer; tandis que le processus élémentaire de l'usager *u*_{*i*}(*e*) se résume a vider un tampon en émettant la trame qu'il contient vers la station *S*_{*i*}₊₁ et à le libérer.

Les demandes de réveils du serveur *s*_{*i*}(*e*), événement *"serveur demandé"* (*sd*₃₃), et de l'usager *u*_{*i*}(*e*), événement *"usager demandé"* (*ud*₃₄), suite aux libérations et attributions de tampons, événements *"tampon plein"* (*tp*₃₁) et *"tampon vide"* (*tv*₃₂), s'opèrent comme pour le couple serveur-usager *C*(*s*_{*i*}(*r*), *u*_{*i*}(*r*)). Le couple serveur-usager *C*(*s*_{*i*}(*e*), *u*_{*i*}(*e*)) a *n*_{*i*}(*e*) +1 états intrinsèques. L'état initial est égal à *n*_{*i*}(*e*), sachant qu'à l'initialisation, le serveur *s*_{*i*}(*e*) est réveillé et l'usager *u*_{*i*}(*e*) est en sommeil. Soit *I*_{*i*}(*e*) la variable qui enregistre les états intrinsèques.

De plus, le couple serveur-usager *C*(*s*_{*i*}(*e*), *u*_{*i*}(*e*)) valide les passages alternés de la station *S*_{*i*} à l'état "fermé" et à l'état "ouvert". Pour cela :
- lorsque l'état intrinsèque *I*_{*i*}(*e*) est égal à *n*_{*i*}*(e*), suite à un événement *"tampon vide"*, le serveur *s*_{*i*}(*e*) disposant de tous les tampons, le passage à l'état "fermé" de la station *S*_{*i*} est validé. La variable binaire (*vf*₃₅) qui mémorise les validations et les invalidations des passages à l'état "fermé" de la station *S*_{*i*}, prend la valeur 0.
- lorsque l'état intrinsèque *I*_{*i*}(*e*) est inférieur à *n*_{*i*}(*e*), l'usager *u*_{*i*}(*e*) disposant au moins d'un tampon, le passage à l'état "ouvert" de la station *S*_{*i*} est validé. La variable (*vf*₃₅) est à 1.

L'homme de l'art notera également que la matrice des transitions d'états de la figure 3a est réalisable par un circuit séquentiel (un événement correspondant à une impulsion d'entrée ou de sortie).

La **figure 3b** représente, pour chacune des stations actives *S*_{*i*}, 1 ≦ *i* ≦ *k*, les entrées et les sorties d'un circuit séquentiel (3), désigné par *E*(*s*_{*i*}(*e*), *u*_{*i*}(*e*)) qui réalise la matrice des transitions d'états du couple serveur-usager *C*(*s*_{*i*}(*e*), *u*_{*i*}(*e*)). Le dit circuit séquentiel est un circuit susceptible de prendre *n*_{*i*}(*e*) +1 états, *n*_{*i*}(*e*) ≧ 2, sous l'effet d'impulsions, simultanées ou non, soumises à deux entrées (31, 32). Les impulsions soumises à l'une des entrées (31) correspondent aux événements *"tampon plein"*; tandis que celles soumises à l'autre entrée (32) correspondent aux événements *"tampon vide"*. Chaque changement d'état fournit ou non des impulsions sur deux sorties (33, 34). Les impulsions fournies à l'une des sorties (33) correspondent aux événements *"serveur demandé"*; tandis que celles fournies sur l'autre sortie (34) correspondent aux événements *"usager demandé".*

De plus, le circuit séquentiel *E*(*s*_{*i*}(*e*), *u*_{*i*}(*e*)) comprend :
- une sortie (35) fournissant un signal de niveau bas, tant que l'état est égal à *n*_{*i*}(*e*), pour valider le passage de la station *S*_{*i*} à l'état "fermé" et un signal de niveau haut, tant que l'état est inférieur à *n*_{*i*}(*e*), pour valider son passage à l'état "ouvert".
- une entrée (30) pour être initialisé dans l'état *I*_{*i*}(*e*) égale à *n*_{*i*}(*e*). Lors de l'initialisation, une impulsion est fournie sur la sortie (33) pour demander le serveur *s*_{*i*}(*e*).

La **figure 4a** représente pour chacune des stations actives *S*_{*i*}, 1≦*i*≦*k*, la matrice des transitions d'états d'un processus serveur et d'un processus usager, désignés par *C*(*s*_{*i*}(*t*), *u*_{*i*}(*t*)) qui partagent *n*_{*i*}(*t*), *n*_{*i*}(*t*) ≧ 3, tampons, pour assurer les fonctions de routage des trames venant de la station *S*_{*i*}₋₁ et allant vers la station *S*_{*i*+1}. Le nombre de tampons *n*_{*i*}(*t*) est un paramètre d'exploitation. Dans la forme de représentation considérée *n*_{*i*}(*t*) égale 4.

Chacun des deux processus qui se déroulent sur des processeurs distincts, résulte de la répétition intermittente d'un processus élémentaire. Le processus élémentaire du serveur *s*_{*i*}(*t*) se résume à remplir un tampon avec une trame, venant de la station *S*_{*i*}₋₁, à diriger vers la station *S*_{*i*}₊₁, et à le libérer; tandis que le processus élémentaire de l'usager *u*_{*i*}(*t*) se résume à vider un tampon en émettant la trame qu'il contient vers la station *S*_{*i*}₊₁ et à le libérer.

Les demandes de réveils du serveur *s*_{*i*}(*t*), événement *"serveur demandé"* (*sd*₄₃), et de l'usager *u*_{*i*}(*t*), événement *"usager demandé"* (*ud*₄₄), suite aux libérations et attributions de tampons, événements *"tampon plein"* (*tp*₄₁) et *"tampon vide"* (*tv*₄₂), s'opèrent comme pour le couple serveur-usager *C*(*s*_{*i*}(*r*), *u*_{*i*}(*r*)). Le couple serveur-usager *C*(*s*_{*i*}(*t*), *u*_{*i*}(*t*)) a *n*_{*i*}(*t*) + 1 états intrinsèques. L'état initial est égal à *n*_{*i*}(*t*), sachant qu'à l'initialisation, le serveur *s*_{*i*}(*t*) est réveillé et l'usager *u*_{*i*}*(t*) est en sommeil. Soit *I*_{*i*}(*t*) la variable qui enregistre les états intrinsèques.

De plus, le couple serveur-usager *C*(*s*_{*i*}(*t*), *u*_{*i*}(*t*)) assure, selon la capacité de transit de la station *S*_{*i*}, les validations suivantes :

Premièrement, le couple serveur-usager *C*(*s*_{*i*}(*t*), *u*_{*i*}(*t*) valide les passages alternés de la station *S*_{*i*} à l'état "fermé" et à l'état "ouvert". Pour cela :
- lorsque l'état intrinsèque *I*_{*i*}(*t*) est égal à *n*_{*i*}(*t*), suite à un événement *"tampon vide"*, le serveur *s*_{*i*}(*t*) disposant de tous les tampons, le passage à l'état "fermé" de la station *S*_{*i*} est validé. La variable binaire (*vf*₄₅) qui mémorise les validations et les invalidations des passages à l'état "fermé" de la station *S*_{*i*}, prend la valeur 0.
- lorsque l'état intrinsèque *I*_{*i*}(*t*) est inférieur à *n*_{*i*}(*t*), l'usager *u*_{*i*}(*t*) disposant au moins d'un tampon, le passage à l'état "ouvert" de la station *S*_{*i*} est validé. La variable (*vf*₄₅) est à 1.

Deuxièmement, le couple serveur-usager *C*(*s*_{*i*}(*t*), *u*_{*i*}(*t*)) contrôle les émissions de la station *S*_{*i*-1}. Pour cela :
- lorsque l'état intrinsèque *I*_{*i*}(*t*) est inférieur ou égal à 1, la capacité de transit de la station *S*_{*i*} étant au plus d'une trame, les émissions de la station *S*_{*i*}₋₁ sont invalidées. La variable binaire (*vp*₄₇) qui mémorise les validations et les invalidations des émissions de la station *S*_{*i*-1}, prend la valeur 1.
- lorsque l'état intrinsèque *I*_{*i*}(*t*) est supérieur à 1, la capacité de transit de la station *S*_{*i*} étant au moins de deux trames, les émissions de la station *S*_{*i*}₋₁ sont validées. La variable (*vp*₄₇) est à 0.

Troisièmement, le couple serveur-usager, *C*(*s*_{*i*}(*t*), *u*_{*i*}(*t*)), asservit l'usager *u*_{*i*}(*e*) de la station *S*_{*i*}, de sorte qu'une trame propre soit émise uniquement si le nombre de trames en transit supplémentaires, acceptables par la station *S*_{*i*}, est supérieur ou égal au seuil d'émission *m*_{*i*}(*t*) avec 3 ≦ *m*_{*i*}(*t*) ≦ *n*_{*i*}(*t*). Pour cela :
- lorsque l'état intrinsèque *I*_{*i*}(*t*) est inférieur à *m*_{*i*}(*t*), la capacité de transit de la station *S*_{*i*} étant inférieure à son seuil d'émission, les réveils de l'usager *u*_{*i*}(*e*) sont invalidés. La variable binaire (*ve*₄₈) qui mémorise les validations et les invalidations des réveils de l'usager *u*_{*i*}(*e*), prend la valeur 1.
- lorsque l'état intrinsèque *I*_{*i*}(*t*) est supérieur ou égal à *m*_{*i*}(*t*), la capacité de transit de la station *S*_{*i*} étant supérieure ou égale à son seuil d'émission, les réveils de l'usager *u*_{*i*}(*e*) sont validés. La variable (*ve*₄₈) est égale à 0.

Le seuil d'émission *m*_{*i*}(*t*) d'une station *S*_{*i*} est un paramètre d'exploitation, à fixer de telle sorte que la station *S*_{*i*} invalide le moins fréquemment possible les émissions de la station *S*_{*i*-1}, sans pour autant freiner les émissions de ses propres trames. Dans la forme de représentation considérée *m*_{*i*}(*t*) égale 3.

De cette façon, quel que soit le nombre de stations actives et quels que soient le type et la longueur des trames, la capacité de transit de l'anneau est toujours supérieure ou égale au minimum *m* des seuils d'émission *m*_{*i*}(*t*) - 1, 1≦*i*≦*k*, des stations actives.

L'homme de l'art notera encore que la matrice des transitions d'états de la figure 4a est réalisable par un circuit séquentiel (un événement correspondant à une impulsion d'entrée ou de sortie).

La **figure 4b** représente, pour chacune des stations actives *S*_{*i*}, 1 ≦ *i ≦ k*, les entrées et les sorties d'un circuit séquentiel (4), désigné par *E*(*s*_{*i*}(*t*), *u*_{*i*}(*t*)) qui réalise la matrice des transitions d'états du couple serveur-usager *C*(*s*_{*i*}(*t*), *u*_{*i*}(*t*)). Le dit circuit séquentiel est un circuit susceptible de prendre *n*ᵢ(*t*) +1 états, *n*_{*i*}(*t*) ≧ 3, sous l'effet d'impulsions, simultanées ou non, soumises à deux entrées (41, 42). Les impulsions soumises à l'une des entrées (41) correspondent aux événements *"tampon plein"*; tandis que celles soumises à l'autre entrée (42) correspondent aux événements *"tampon vide"*. Chaque changement d'état fournit ou non des impulsions sur deux sorties (43, 44). Les impulsions fournies à l'une des sorties (43) correspondent aux événements *"serveur demandé"*; tandis que celles fournies sur l'autre sortie (44) correspondent aux événements *"usager demandé".*

De plus, le circuit séquentiel *E*(*s*_{*i*}(*t*), *u*_{*i*}(*t*)) comprend :
- une sortie (45) fournissant un signal de niveau bas, tant que l'état est égal à *n*_{*i*}(*t*), pour valider le passage de la station *S*_{*i*} à l'état "fermé" ou un signal de niveau haut, tant que l'état est inférieur à *n*_{*i*}(*t*), pour valider son passage à l'état "ouvert".
- une sortie (47) fournissant, sur la voie de signalisation *Vs*, un signal de niveau haut, tant que l'état est inférieur ou égal à 1, pour que la station *S*_{*i*}₋₁ suspende ses émissions ou un signal de niveau bas, tant que l'état est supérieur à 1, pour qu'elle reprenne ses émissions.
- une sortie (48) fournissant un signal de niveau bas, tant que l'état est supérieur ou égal à *m*_{*i*}(*t*), pour valider les émissions de l'usager *u*_{*i*}(*e*) ou un signal de niveau haut, tant que l'état est inférieur à *m*_{*i*}(*t*), pour les invalider.
- une entrée (40) pour être initialisé dans l'état *I*_{*i*}(*t*) égale *n*_{*i*}(*t*). Lors de l'initialisation, une impulsion est fournie sur la sortie (43) pour demander le serveur *s*_{*i*}(*t*).

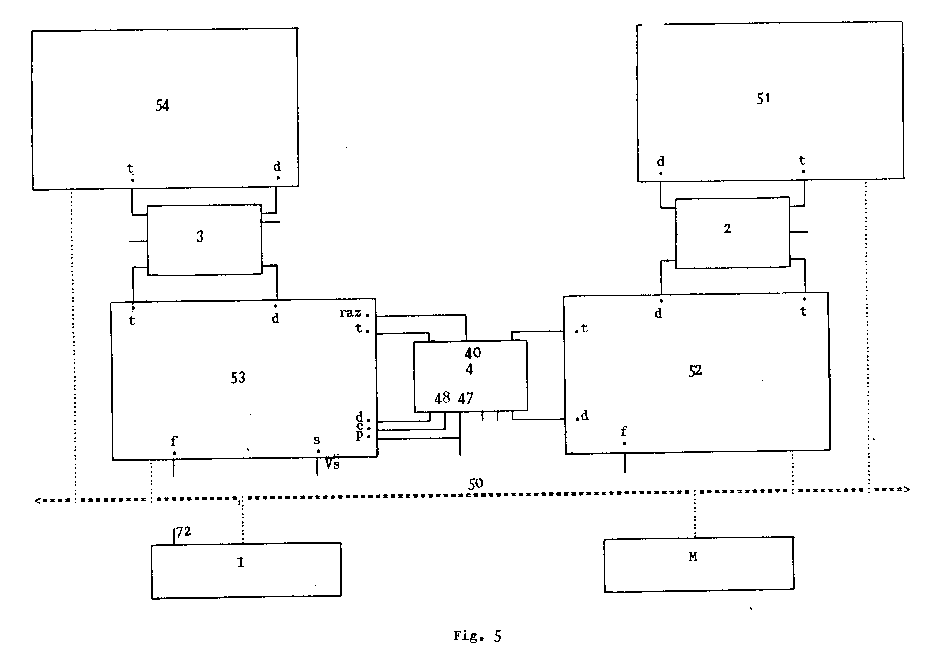

La **figure 5** décrit l'architecture de chacune des stations actives *S*_{*i*}, 1≦*i*≦*k*. Cette architecture comprend :
- Un bus (50) sur lequel sont branchés quatre processeurs *P*_{*r*} (51), *P*_{*rt*} (52), *P*_{*et*} (53) et *P*_{*e*} (54), de temps de cycle inférieur à 50 nanosecondes, du type Motorola (marque déposée) 68020, une mémoire (*M*) à accès multiples et un coupleur de communications (*I*) à accès direct mémoire.
- Les circuits séquentiels *E*(*s*_{*i*}(*r*), *u*_{*i*}(*r*)) (2), E(*s*_{*i*}(*e*), *u*_{*i*}(*e*)) (3) et *E*(*s*_{*i*}(*t*), *u*_{*i*}(*t*)) (4) qui synchronisent les processus serveurs ou usagers des processeurs *P*_{*r*}, *P*_{*rt*}, *P*_{*et*} et *P*_{*e*}.
- Le serveur *s*_{*i*}(*r*) du couple serveur-usager *C*(*s*_{*i*}(*r*), *u*_{*i*}(*r*)) se déroule sur le processeur *P*_{*rt*} (52); tandis que l'usager *u*_{*i*}*(r*) se déroule sur le processeur *P*_{*r*} (51). Le serveur *s*_{*i*}(*e*) du couple serveur-usager *C*(*s*_{*i*}(*e*), *u*_{*i*}(*e*)) se déroule sur le processeur *P*_{*e*} (54); tandis que l'usager *u*_{*i*}(*e*) se déroule sur le processeur *P*_{*et*} (53). Le serveur *s*_{*i*}(*t*) du couple serveur-usager *C*(*s*_{*i*}(*t*), *u*_{*i*}(*t*)) se déroule sur le processeur *P*_{*rt*} (52); tandis que l'usager *u*_{*i*}(*t*) se déroule sur le processeur *P*_{*et*} (53).

Chacun des couples serveur-usager dispose dans la mémoire (*M*), qui contient tous les tampons, d'une table, appelée *répertoire*, dans laquelle sont rangées, à raison d'une par entrée, les adresses des tampons qui lui sont réservés. A ce répertoire sont associés deux pointeurs. L'un des pointeurs, réservé au serveur, désigne une entrée du répertoire dans laquelle se trouve l'adresse, appelée *adresse courante*, du tampon à remplir. L'autre pointeur, réservé à l'usager, désigne également une entrée du répertoire dans laquelle se trouve l'adresse courante du tampon à vider. A l'initialisation, les deux pointeurs désignent la même entrée du répertoire.

Chacun des processeurs *P*_{*r*}, *P*_{*rt*}, *P*_{*et*} et *P*_{*e*} comprend des bits de contrôle et de statut. Chacun des processus serveur ou usager d'un même processeur dispose de deux bits, désignés par *d* et *t*. Le bit de statut *d* est accessible uniquement en lecture; tandis que le bit de contrôle *t* est accessible uniquement en écriture. Pour un serveur, le bit *d* est à 1, suite à une impulsion qui traduit un événement *"serveur demandé".* Il est annulé consécutivement à une lecture. Le bit *t* est écrit à 1 pour déclencher une impulsion qui traduit un événement *"tampon plein".* Il est annulé consécutivement à l'impulsion. De la même façon, pour un usager, les bits *d* et *t* servent à gérer les événements *"usager demandé"* et *"tampon vide".*

Chacun des processeurs *P*_{*r*}, *P*_{*rt*}, *P*_{*et*} et *P*_{*e*} comprend un processus, appelé *moniteur*, qui, lorsqu'il est réveillé, consulte en permanence le bit *d* de chacun de ses processus serveurs ou usagers. Lorsqu'un bit *d* est à 1, le moniteur réveille le processus serveur ou usager correspondant, à moins qu'il soit invalidé.

Lorsque le serveur ou l'usager, suite à son réveil, a terminé de remplir ou de vider un tampon, il déplace son pointeur sur l'entrée suivante du répertoire (la première dans le cas de la dernière) et met à 1 son bit *t*.

Le moniteur du processeur *P*_{*rt*} (52), du fait que le coupleur de communications (*I*) est une ressource accessible en entrée par un seul processus à la fois, réveille les serveurs *s*_{*i*}(*r*) et *s*_{*i*}(*t*) l'un après l'autre pour la durée d'un processus élémentaire. Le serveur réveillé initialise, pour son compte, avec son pointeur, le coupleur de communications en entrée. Lorsque le tampon est rempli avec une trame valide, le serveur réveillé examine l'adresse de destination de la trame de sorte que :
- Premièrement, lorsque le tampon est à remettre à son usager, le serveur réveillé déplace son pointeur sur l'entrée suivante de son répertoire et met à 1 son bit *t*.
- Deuxièmement, lorsque le tampon est à remettre à l'usager de l'autre serveur alors en sommeil, le serveur réveillé lit et consulte le bit *d* de ce dernier. Lorsque ce bit *d* est à 1, le serveur réveillé échange l'adresse courante du serveur en sommeil avec la sienne, puis il déplace d'une entrée le pointeur du serveur en sommeil et met à 1 le bit *t* de ce dernier. Enfin, le serveur réveillé réinitialise pour son compte le coupleur de communications. Par contre, lorsque le bit *d* du serveur en sommeil est à 0, ce dernier ne disposant pas de tampon du fait qu'il n'est pas demandé, le serveur réveillé conserve son tampon et réinitialise pour son compte le coupleur de communications. La trame est perdue.
- Troisièmement, lorsque la trame n'est pas uniquement destinée à la station *S*_{*i*}, le serveur réveillé lit et consulte également le bit *d* du serveur en sommeil. Lorsque ce bit *d* est à 1, le serveur réveillé recopie son tampon courant dans le tampon courant du serveur en sommeil, puis il déplace d'une entrée le pointeur du serveur en sommeil et met à 1 le bit *t* de ce dernier. Enfin, il déplace également son pointeur sur l'entrée suivante de son répertoire et met à 1 son bit *t*. Par contre, lorsque le bit *d* du serveur en sommeil est à 0, le serveur réveillé déplace son pointeur sur l'entrée suivante de son répertoire et met à 1 son bit *t*.

Toutefois, il convient de remarquer qu'à l'issue de la réception d'une trame, le bit *d* du serveur *s*_{*i*}(*t*) est toujours à 1, du fait que ce dernier dispose toujours au moins d'un tampon.

Les serveurs *s*_{*i*}(*r*) et *s*_{*i*}(*t*) détruisent les trames erronées et les trames émises par la station *S*_{*i*}. De plus, lorsque la station *S*_{*i*} est dans l'état "fermé", les serveurs *s*_{*i*}(*r*) et *s*_{*i*}(*t*) détruisent les trames qui ne sont pas destinées à la station *S*_{*i*}. Pour cela, le processeur *P*_{*rt*} (52) comprend un bit de statut, désigné par *f*, accessible uniquement en lecture, qui, lorsque la sortie (72) du coupleur de communications émet un signal de niveau bas, prend la valeur 0 et qui, lorsque la même sortie émet un signal de niveau haut, prend la valeur 1. Lorsque le bit de statut *f* prend la valeur 1, la station *S*_{*i*} étant dans l'état "fermé", les serveurs *s*_{*i*}(*r*) et *s*_{*i*}(*t*) détruisent les trames non destinées à la station *S*_{*i*}.

Le moniteur du processeur *P*_{*et*} (53), du fait que le coupleur de communications (*I*) est également une ressource accessible en sortie par un seul processus à la fois, réveille les usagers *u*_{*i*}(*e*) et *u*_{*i*}(*t*) l'un après l'autre, dans la mesure où ils sont validés, pour la durée d'un processus élémentaire. Mais, dans ce cas, les usagers *u*_{*i*}(*e*) et *u*_{*i*}(*t*) sont indépendants.

Néanmoins, le processeur *P*_{*et*} comprend quatre bits de statut et un bit de contrôle supplémentaires, désignés respectivement par *e, f*, *p, s,* et *raz*.

Le bit *e* qui enregistre les validations des réveils de l'usager *u*_{*i*}(*e*), est accessible uniquement en lecture. Le bit *e* prend la valeur 0 lorsque la sortie (48) du circuit séquentiel *E*(*s*_{*i*}(*t*), *u*_{*i*}(*t*)) (4) de la station *S*_{*i*} émet un signal de niveau bas. Par contre, il prend la valeur 1 lorsque la même sortie émet un signal de niveau haut.

Le bit *f* qui enregistre les validations des passages à l'état "fermé" de la station *S*_{*i*}, est accessible uniquement en lecture. Le bit *f* prend la valeur 0 lorsque la sortie (72) du coupleur de communications de la station *S*_{*i*} émet un signal de niveau bas. Par contre, il prend la valeur 1 lorsque la même sortie émet un signal de niveau haut.

Le bit *p* qui enregistre les validations des émissions de la station *S*_{*i*}₋₁, est accessible uniquement en lecture. Le bit *p* prend la valeur 0 lorsque la sortie (47) du circuit séquentiel *E*(*s*_{*i*}(*t*), *u*_{*i*}(*t*)) (4) de la station *S*_{*i*} émet un signal de niveau bas. Par contre, il prend la valeur 1 lorsque la même sortie émet un signal de niveau haut.

Le bit *s* qui enregistre les validations des émissions de la station *S*_{*i*}, est accessible uniquement en lecture. Le bit *s* prend la valeur 0 lorsque la sortie (47) du circuit séquentiel *E*(*s*_{*i*+1}(*t*), *u*_{*i*+1}(*t*)) (4) de la station *S*_{*i*+1} émet un signal de niveau bas sur la voie de signalisation *Vs*. Par contre, il prend la valeur 1 lorsque la même sortie émet un signal de niveau haut.

Le bit *raz*, accessible uniquement en écriture, est écrit à 1 pour initialiser le circuit séquentiel *E*(*s*_{*i*}(*t*), *u*_{*i*}(*t*)) (4) de la station *S*_{*i*}. Il est annulé consécutivement à l'impulsion.

Le moniteur du processeur *P*_{*et*}, lorsqu'il est réveillé, consulte les bits *e*, *f*, *p* et *s* de sorte que :
- Premièrement le moniteur consulte les bits *p* et *s*. Lorsque le bit *s* égale 1 tandis que le bit *p* est nul, le moniteur attend que le bit *s* s'annule. Par contre, lorsque le bit *s* et le bit *p* sont l'un et l'autre à 1, le moniteur initialise un compteur de temps à la valeur du délai d'interblocage. Lorsque le compteur de temps s'annule avant que le bit *s* soit annulé, le moniteur réinitialise les pointeurs du couple serveur-usager *C*(*s*_{*i*}(*t*), *u*_{*i*}(*t*)) et met à 1 le bit *raz* pour remettre le circuit séquentiel *E*(*s*_{*i*}(*t*), *u*_{*i*}(*t*)) (4) dans l'état *n*_{*i*}(*t*). Sinon, le compteur de temps est désamorcé dès que le bit *s* s'annule.

Un tel interblocage peut intervenir suite au détachement d'une station ou aux détachements simultanés de plusieurs stations. Il suppose, néanmoins, que toutes les stations actives étaient dans l'état "ouvert" et que la capacité de transit de l'anneau était détenue par la ou les stations détachées. Ce concours de circonstances est d'autant plus improbable que le nombre des stations est important, compte tenu de leur trafic diversifié et du dialogue qu'elles entretiennent.
- Deuxièmement, lorsque le bit *s* est nul, le moniteur consulte le bit *f*. Lorsque le bit *f* égale 1, la station étant dans l'état "fermé", le moniteur recommence à consulter les bits *p* et *s*.
- Troisièmement, lorsque les bits *f* et *s* sont nuls, le moniteur consulte le bit *d* de l'usager *u*_{*i*}(*e*) et le bit *e*. Lorsque le bit *d* égale 1 et le bit *e* égale 0, la capacité de transit de la station *S*_{*i*} étant supérieure ou égale à son seuil d'émission, le moniteur réveille l'usager *u*_{*i*}(*e*).
- Quatrièmement, les bits *f* et *s* étant nuls, lorsque le bit *d* de l'usager *u*_{*i*}(*e*) égale 0 ou lorsque le bit *e* égale 1, le moniteur consulte le bit *d* de l'usager *u*_{*i*}(*t*). Lorsque le bit *d* de l'usager *u*_{*i*}(*t*) égale 1, le moniteur réveille l'usager *u*_{*i*}(*t*). Par contre, lorsque le bit *d* de l'usager *u*_{*i*}(*t*) égale 0, le moniteur recommence à consulter les bits *p* et *s*.

Cette architecture réduit au minimum la programmation ou la microprogrammation consistant à synchroniser les processus serveurs et usagers. Le temps de traitement des trames s'en trouve fortement réduit.

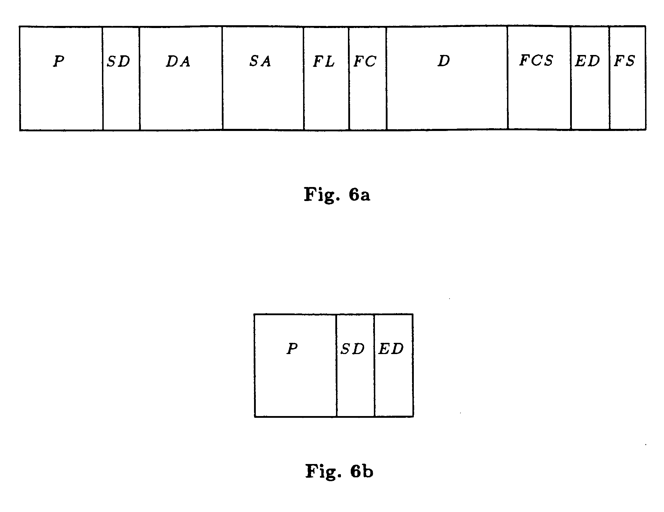

La **figure 6a** décrit le format des trames, en partie générées par le serveur *s*_{*i*}(*e*), de chacune des stations actives *S*_{*i*}, 1≦*i*≦*k,* à partir de l'adresse de destination et des données fournies par la sous-couche de "Contrôle de Lien Logique" ou la sous-couche de "Contrôle d'Accès au Milieu".

La sous-couche de "Contrôle d'Accès au Milieu" enregistre et comptabilise les erreurs de transmission détectées par la logique de réception du coupleur de communications (*I*). A cette fin, deux processus collaborent en communiquant par une boîte aux lettres située dans la mémoire (*M*). L'un des processus qui se déroule sur le processeur *P*_{*r*} (51) enregistre, par l'intermédiaire du couple serveur-usager *C*(*s*_{*i*}(*r*), *u*_{*i*}(*r*)), les erreurs détectées par la logique de réception et les requêtes d'états d'incidents émises par une station dédiée à la gestion du réseau local considéré. L'autre processus qui se déroule sur le processeur *P*_{*e*} (54) répond aux requêtes d'états d'incidents par l'intermédiaire du couple serveur-usager *C*(*s*_{*i*}(*e*), *u*_{*i*}(*e*)).

Le format d'une trame se compose des champs suivants :
- Un champ de préambule (*P*), d'au moins 6 octets, permettant à la logique de réception des stations actives qui réceptionnent la trame, de se synchroniser sur l'horloge d'émission de la station *S*_{*i*}.
- Un champ délimiteur de début de trame (*SD*), d'un octet, permettant, à la logique de réception des stations actives qui réceptionnent la trame, de déclencher la reconnaissance des adresses destination et source et le contrôle de redondance polynomiale.
- Un champ d'adresse de destination (*DA*), de 48 bits, spécifiant l'adresse de la ou des stations destinataires.
- Un champ d'adresse source (*SA*), de 48 bits, identifiant la station *S*_{*i*}.
- Un champ durée de vie (*FL*), de deux octets, spécifiant la durée de vie de la trame. Ce champ est initialisé avec un entier au moins égale au nombre de stations raccordées à l'anneau. Lorsqu'une trame est en transit dans une station à l'état "ouvert" et lorsque le champ durée de vie (*FL*) est nul, le serveur *S*_{*i*}(*r*) ou *S*_{*i*}(*t*) détruit la trame; sinon il diminue de 1 le champ durée de vie et remet la trame à l'usager *u*_{*i*}(*t*).

Les trames ont une durée de vie limitée afin d'éviter que certaines d'entre elles puissent cheminer indéfiniment dans l'anneau, du fait que leur station destinataire est absente et qu'elles ont perdu leur station source.
- Un champ de contrôle de trame (*FC*), d'un octet, identifiant la sous-couche qui est à l'origine de la trame.
- Un champ de données (*D*), d'aucun ou de plusieurs octets de données, fournis par la sous-couche de "Contrôle de Lien Logique" ou la sous-couche de "Contrôle d'Accès au Milieu".
- Un champ de code de redondance polynomiale (*FCS*), de 32 bits, permettant, à la logique de réception des stations actives qui réceptionnent la trame, de détecter les erreurs de transmission.
- Un champ délimiteur de fin de trame (*ED*), d'un octet, permettant, entre autres, à la logique de réception des stations actives qui réceptionnent la trame, de terminer le contrôle de redondance polynomiale.
- Un champ de statut (*FS*), d'un octet, comprenant un sous champ, trame à détruire (*FD*), de 1 bit, indiquant, lorsqu'il est à 1, que la trame est à détruire. Ce champ est initialisé à 0.

Au cours de la réception d'une trame, la logique de réception du coupleur de communications (*I*) d'une station active dans l'état "fermé" contrôle l'adresse de destination, l'adresse source et le code de redondance polynomiale. La trame étant valide, lorsqu'elle est destinée uniquement à la station ou lorsqu'elle a été émise par elle, la logique de réception, après reconnaissance du délimiteur de fin de trame (*ED*), modifie à 1 le bit trame à détruire (*FD*). Les trames marquées à détruire, sont retirées de l'anneau par le serveur *s*_{*i*}(*r*) ou *s*_{*i*}(*t*) de la première station active dans l'état "ouvert" qui les réceptionne.

Les champs de contrôle de redondance polynomiale (*FCS*), de délimiteur de fin de trame (*ED*) et le champ de statut (*FS*) sont générés et initialisés par la logique d'émission du coupleur de communications (*I*) de la station *S*_{*i*} lors de l'émission de la trame

La **figure 6b** décrit le format des trames vides, générées par le coupleur de communications (*I*) de chacune des stations actives *S*_{*i*}, 1 ≦ *i* ≦ *k*. Ces trames comportent un champ de préambule (*P*), un champ délimiteur de début de trame (*SD*) et un champ délimiteur de fin de trame (*ED*).

Lorsque le passage dans l'état "ouvert" d'une station active *S*_{*i*}, 1≦*i*≦*k,* à l'état "fermé", est demandé, tandis qu'elle retransmet, bit par bit, vers la station *S*_{*i*}₊₁, le préambule (*P*) d'une trame, la logique de réception premièrement, interrompt la retransmission bit par bit après la reconnaissance du délimiteur de début de trame (*SD*), deuxièmement, consécutivement à la retransmission du délimiteur de début de trame, émet un délimiteur de fin de trame (*ED*). La trame vide émise, la station *S*_{*i*} passe dans l'état "ouvert". Une trame vide émise par la station *S*_{*i*} est retirée de l'anneau par la première station active dans l'état "ouvert" qui la réceptionne.

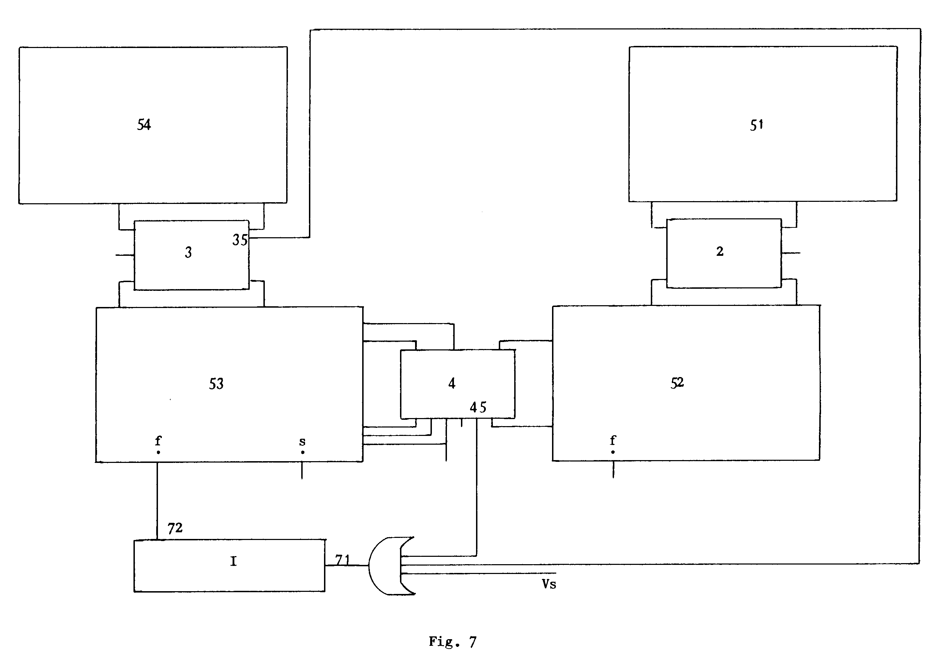

La **figure 7** décrit pour chacune des stations *S*_{*i*}, 1 ≦ *i* ≦ *k,* les moyens qui lui permettent de passer alternativement dans l'état "ouvert" et l'état "fermé".

Le passage d'une station *S*_{*i*}, 1≦*i*≦*k*, de l'état "fermé" à l'état "ouvert" dépend au moins de l'une des conditions suivantes:
- La station *S*_{*i*} a au moins une trame propre à émettre. Dans ce cas, l'état intrinsèque *I*_{*i*}(*e*) du couple serveur-usager *C*(*s*_{*i*}(*e*), *u*_{*i*}(*e*)) de la station *S*_{*i*} est inférieur à *n*_{*i*}(*e*). Le circuit séquentiel *E*(*s*_{*i*}(*e*), *u*_{*i*}(*e*)) (3) émet alors, sur sa sortie (35), un signal de niveau haut.
- La station *S*_{*i*} a une trame en transit à émettre. Dans ce cas, l'état intrinsèque *I*_{*i*}(t) du couple serveur-usager *C*(*s*_{*i*}*(t*), *u*_{*i*}(*t*)) de la station *S*_{*i*} est égal à *n*_{*i*}(*t*) -1. Le circuit séquentiel *E*(*s*_{*i*}(*t*), *u*_{*i*}(*t*)) (4) émet alors, sur sa sortie (45), un signal de niveau haut.
- La station *S*_{*i*} est invalidée par la station *S*_{*i*}₊₁. Dans ce cas, l'état intrinsèque *I*_{*i*}₊₁(*t*) du couple serveur-usager *C*(*s*_{*i*}₊₁(*t*), *u*_{*i*+1}(*t*)) de la station *S*_{*i*}₊₁, est inférieur ou égal à 1. Le circuit séquentiel *E*(*s*_{*i*}₊₁(*t*), *u*_{*i*}₊₁(*t*)) (4) émet alors, sur sa sortie (45), un signal de niveau haut sur la voie de signalisation *Vs*.

Lorsque l'une ou l'autre de ces conditions est remplie, un signal de niveau haut est appliqué à l'entrée (71) du coupleur de communications (*I*). La station *S*_{*i*} passe dans l'état "ouvert" dès que la logique de réception de ce dernier est inactive ou dès qu'elle a émise une trame vide après reconnaissance du délimiteur de début de trame. Dans l'état "ouvert", le coupleur de communications (*I*) émet, sur sa sortie (72) un signal de niveau bas. Le bit de statut *f* du processeur *P*_{*rt*} (52) et le bit de statut *f* du processeur *P*_{*et*} (53) prennent la valeur 0.

Le passage d'une station *S*_{*i*}, 1≦*i*≦*k*, de l'état "ouvert" à l'état "fermé" requiert les trois conditions suivantes:
- La station *S*_{*i*} n'a pas de trame propre à émettre. Dans ce cas, l'état intrinsèque *I*_{*i*}(e) du couple serveur-usager *C*(*s*_{*i*}(*e*), *u*_{*i*}(*e*)) de la station *S*_{*i*} est égal à *n*_{*i*}(*e*). Le circuit séquentiel *E*(*s*_{*i*}(*e*), *u*ᵢ(*e*)) (3) émet alors, sur sa sortie (35), un signal de niveau bas.
- La station S_{*i*} n'a pas de trame en transit à émettre. Dans ce cas, l'état intrinsèque *I*_{*i*}(*t*) du couple serveur-usager *C*(*s*_{*i*}(*t*), *u*_{*i*}(*t*)) de la station *S*_{*i*} est égal à *n*_{*i*}(*t*). Le circuit séquentiel *E*(*s*_{*i*}(*t*), *u*_{*i*}(*t*)) (4) émet alors, sur sa sortie (45), un signal de niveau bas.
- La station *S*_{*i*} n'est pas invalidée par la station *S*_{*i*}₊₁. Dans ce cas, l'état intrinsèque *I*_{*i*}₊₁(*t*) du couple serveur-usager *C*(*s*_{*i*}₊₁(*t*), *u*ᵢ₊₁(*t*)), de la station *S*_{*i*}₊₁, est supérieur ou égal à 2. Le circuit séquentiel *E*(*s*_{*i*+1}(*t*), *u*_{*i*+1}(*t*)) (4) émet alors, sur sa sortie (45), un signal de niveau bas sur la voie de signalisation *Vs*.

Lorsque ces trois conditions sont remplies, un signal de niveau bas est appliqué à l'entrée (71) du coupleur de communications (*I*). La station *S*_{*i*} passe alors dans l'état "fermé" dès que la logique de réception de ce dernier est inactive. Dans l'état "fermé", le coupleur de communications (*I*) émet, sur sa sortie (72), un signal de niveau haut. Le bit de statut *f* du processeur *P*_{*rt*} (52) et le bit de statut *f* du processeur *P*_{*et*} (53) prennent la valeur 1.

Lorsque le passage de la station *S*_{*i*} à l'état "fermé" s'opère à la fin de la réception d'une trame, si la trame réceptionnée est une trame à diriger vers la station *S*_{*i*+1}, l'état intrinsèque *I*_{*i*}(*t*) du couple serveur-usager *C*(*s*_{*i*}(*t*), *u*_{*i*}(*t*)), à l'issue de l'événement *"tampon plein"*, est égal à *n*_{*i*}(*t*) - 1. Le circuit séquentiel *E*(*s*_{*i*}(*t*), *u*_{*i*}(*t*)) (4) émet alors, sur sa sortie (45), un signal de niveau haut. La station *S*_{*i*} passe, au plus tard, du fait de la longueur du préambule, dans l'état "ouvert" après émission d'un délimiteur de fin de trame suite à la reconnaissance du délimiteur de début de trame de la trame suivante par la logique de réception.

Par ce procédé, les transitions d'états d'une station *S*_{*i*} sont très rapides. Elles peuvent s'opérer entre le passage de deux trames compte tenu que celles-ci ont un préambule.

## Revendications

1. Procédé de communication pour *k,k* ≧ 2 stations, émettrices et/ou réceptrices, reliées l'une à l'autre en série par une voie de données (*Vd*) et une voie de signalisation (*Vs*) unidirectionnelles et de sens contraire, utilisant pour chacune des stations *S*_{*i*}, 1 ≦ *i* ≦ *k* une méthode de synchronisation pour deux processus qui se partagent *n,n* ≧ 2 tampons mémoires, permettant une régulation distribuée du trafic au moyen de la voie de signalisation (*Vs*) de sorte que les stations traitées d'égale à égale accèdent simultanément à la voie de données (*Vd*) sans perdre d'information et sans s'interbloquer, dans lequel :
· premièrement, les trames sont de longueur constante ou variable avec une adresse de destination individuelle ou de groupe ;
· deuxièmement, chacune des stations *S*_{*i*}, 1 ≦ *i* ≦ *k* a deux états d'insertion :
- une station *S*_{*i*} est dans l'état *fermé* lorsqu'elle réceptionne et répète vers la station suivante *S*_{*i*}₊₁ les bits des trames venant de la station précédente *S*_{*i*}₋₁, sachant que parmi les trames réceptionnées, elle ignore les trames qui ne lui sont pas destinées,
- une station *S*_{*i*} est dans l'état *ouvert* lorsqu'elle réceptionne uniquement les bits des trames venant de la station précédente *S*_{*i*}₋₁ sachant que parmi les trames réceptionnées, elle range en transit les trames qui ne lui sont pas destinées ;
· troisièmement, chacune des stations S_{*i*}, 1 ≦ *i* ≦ *k*, dans l'état ouvert, suspend l'émission et la retransmission de ses trames, lorsqu'elle détecte sur la voie de signalisation (*Vs*) un signal de niveau haut venant de la station suivante *S*_{*i*}₊₁, au plus tard à la fin de l'émission ou de la retransmission éventuellement en cours, la station *S*_{*i*} reprenant ses émissions et ses retransmissions lorsqu'elle redétecte sur la voie de signalisation (*Vs*) un signal de niveau bas ;
caractérisé en ce que :
· premièrement, chacune des stations *S*_{*i*}, 1 ≦ *i* ≦ *k*, dans l'état ouvert, réceptionne et retransmet les trames qui transitent au moyen de deux processus se partageant *n*_{*i*}(*t*) tampons mémoires avec *n*_{*i*}(*t*) ≧ 3, l'un des processus dit serveur *s*_{*i*}(*t*) remplissant chacun des tampons mémoires avec une trame venant de la station précédente *S*_{*i*}₋₁ et l'autre processus dit usager *u*_{*i*}(*t*) les vidant en retransmettant leur trame vers la station suivante *S*_{*i*}₊₁,
sachant que :
- la *capacité nominale de transit* d'une station *S*_{*i*} est le nombre *n*_{*i*}(*t*) de tampons mémoires partagés par le serveur *s*_{*i*}(*t*) et l'usager *u*_{*i*}(*t*), autrement dit, la capacité nominale de transit est le nombre maximum de trames en transit que la station *S*_{*i*} peut accepter,
- la *capacité de transit I*_{*i*}(*t*) d'une station *S*_{*i*} est le nombre de tampons mémoires à la disposition du serveur *s*_{*i*}(*t*) à un moment donné, autrement dit, la capacité de transit est le nombre de trames en transit supplémentaires que la station *S*_{*i*} peut encore accepter, à un moment donné,
- une *trame en transit* dans une station *S*_{*i*} est une trame rangée dans un tampon mémoire à la disposition de l'usager *u*_{*i*}(*t*), autrement dit, une trame en transit est une trame complètement réceptionnée en attente de retransmission ou en cours de retransmission;
· deuxièmement, chacune des stations *S*_{*i*}, 1 ≦ *i* ≦ *k*, a deux seuils de capacité de transit qui conditionnent son comportement en fontion de sa capacité de transit *I*_{*i*}(*t*), de sorte que :
- le premier seuil de capacité de transit, dit *seuil d'émission*, étant fixé à *m*_{*i*}(*t*) tampons mémoires ou trames avec *m*_{*i*}(*t*) ≦ *n*_{*i*}(*t*) et la station *S*_{*i*} étant dans l'état ouvert sans détecter sur la voie de signalisation (*Vs*) un signal de niveau haut, si la capacité de transit *I*_{*i*}(*t*) de la station *S*_{*i*} est supérieure ou égale à *m*_{*i*}(*t*) tampons mémoires, la station *S*_{*i*} émet une trame constituée par elle, dite *trame propre,* de longueur maximum ou non, sinon la station *S*_{*i*} émet une trame en transit,
- le second seuil de capacité de transit étant fixé à 1 tampon mémoire ou trame et la station *S*_{*i*} étant dans l'état ouvert, si la capacité de transit *I*_{*i*}(*t*) de la station *S*_{*i*} décroît à 1 tampon mémoire, la station *S*_{*i*} émet sur la voie de signalisation (*Vs*) un signal de niveau haut de sorte qu'elle puisse accepter la dernière trame éventuellement encore émise ou retransmise par la station précédente *S*_{*i*}₋₁ avant que cette dernière ne suspende ses émissions, la station *S*_{*i*} maintenant ledit signal de niveau haut tant que sa capacité de transit *I*_{*i*}(*t*) ne croît pas à 2 tampons mémoires, sinon la station *S*_{*i*} émet un signal de niveau bas,
- le seuil d'émission est fixé à *m*_{*i*}(*t*) tampons mémoires ou trames avec *m*_{*i*}(*t*) ≧ 3 de sorte que les trames insérées sur la voie de données (*Vd*) circulent de station en station jusqu'à leur retrait quels que soient leur longueur et leur type d'adressage, sans interblocage des dites stations;
· troisièmement, chacune des stations *S*_{*i*}, 1 ≦ *i* ≦ *k*, est en mesure :
- de passer de l'état fermé à l'état ouvert lorsqu'elle a au moins une trame en attente d'émission ou lorsqu'elle détecte sur la voie de signalisation (*Vs*) un signal de niveau haut,
- de passer de l'état ouvert à l'état fermé lorsqu'elle n'a plus de trame en attente d'émission et lorsqu'elle détecte sur la voie de signalisation (*Vs*) un signal de niveau bas;
· quatrièmement, chacune des stations *S*_{*i*}, 1 ≦ *i* ≦ *k*, dans l'état fermé, modifie à 1 le bit dit *trame à détruire FD* du champ de statut (*FS*) des trames valides qui lui sont uniquement destinées ou qu'elle a émises, une trame avec le bit trame à détruire positionné étant retirée de la voie de données (*Vd*) par la première station dans l'état ouvert qui la réceptionne.

2. Procédé de communication selon la revendication **1** caractérisé en ce que chacune des stations *S*_{*i*}, 1 ≦ *i ≦ k*, dans l'état fermé, qui a au moins une trame en attente d'émission ou qui détecte sur la voie de signalisation (*Vs*) un signal de niveau haut passe dans l'état ouvert :
- soit entre deux passages de trames consécutives,
- soit lors de la retransmission bit par bit d'une trame, après émission d'un délimiteur de fin de trame (*ED*) suite à la reconnaissance d'un délimiteur de début de trame (*SD*), la station *S*_{*i*} ayant interrompu la retransmission bit par bit de ladite trame à la reconnaissance dudit délimiteur de début de trame (*ED*).

3. Procédé de communication selon la revendication **1** caractérisé en ce que chacune des stations *S*_{*i*}, 1 ≦ *i* ≦ *k*, dans l'état ouvert, qui n'a plus de trame en attente d'émission et qui détecte sur la voie de signalisation (*Vs*) un signal de niveau bas passe dans l'état fermé au plus tard à la fin de la réception éventuellement en cours.

4. Procédé de communication selon la revendication **1** caractérisé en ce que le serveur *s*_{*i*}(*t*) et l'usager *u*_{*i*}(*t*) disposant l'un et l'autre d'un bit de contrôle (*t*) et d'un bit de statut (*d*) sont synchronisés par un troisième processus dont les fonctionnalités sont décrites par une matrice de transitions d'états, dite matrice des transitions d'états du couple serveur-usager *C*(*s*_{*i*}(*t*),*u*_{*i*}(*t*)) et qui est mis en oeuvre par un circuit séquentiel, dit circuit séquentiel *E*(*s*_{*i*}(*t*), *u*_{*i*}(*t*)) (4), de sorte que :
· premièrement, chacun des deux processus serveur *s*_{*i*}(*t*) et usager *u*_{*i*}(*t*) positionne son bit de contrôle (*t*) et se met en sommeil chaque fois qu'il a rempli ou vidé un tampon mémoire, ledit bit de contrôle (*t*) s'annulant suite à une impulsion déclenchée par son écriture :
· deuxièmement, chaque fois que le bit de contrôle (*t*) du serveur *s*_{*i*}(*t*) et/ou le bit de contrôle (*t*) de l'usager *u*_{*i*}(*t*) sont positionnés, conformément à la matrice des transitions d'états du couple serveur-usager *C*(*s*_{*i*}(*t*), *u*_{*i*}(*t*)) :
- le processus de synchronisation met à jour la capacité de transit *I*_{*i*}(*t*) et décide du réveil du serveur *s*_{*i*}(*t*) et/ou de l'usager *u*_{*i*}(*t*) en positionnant pour cela leur bit de statut (*d*) conformément à la nouvelle capacité de transit *I*_{*i*}(*t*),
- le processus de synchronisation positionne ou annule un bit de statut (*e*) dans la station *S*_{*i*} conformément à la nouvelle capacité de transit *I*_{*i*}(*t*), ledit bit de statut (*e*) validant ou invalidant de cette manière les émissions des trames propres de la station *S*_{*i*},
- le processus de synchronisation positionne ou annule au moyen de la voie de signalisation (*V*_{*s*}) un bit de statut (*s*) dans la station précédente *S*_{*i*}₋₁ conformément à la nouvelle capacité de transit *I*_{*i*}(*t*), ledit bit de statut (s) validant ou invalidant de cette manière les émissions et les retransmissions des trames de la station précédente *S*_{*i*}₋₁ ;
· troisièmement, chacun des deux processus serveur *s*_{*i*}(*t*) et usager *u*_{*i*}(*t*) est réveillable lorsque son bit de statut (*d*) est positionné, ledit bit de statut (*d*) étant annulé par lecture après avoir été positionné par une impulsion.

5. Procédé de communication selon les revendications **1** et **2** caractérisé en ce que la matrice des transitions d'états du couple serveur-usager *C*(*s*_{*i*}(*t*),*u*_{*i*}(*t*)) décrit que :
· premièrement, lorsque le serveur *s*_{*i*}(*t*) positionne son bit de contrôle (*t*), ce qui correspond à un événement dit "tampon plein" (*tp*), la capacité de transit *I*_{*i*}(*t*), dite aussi état courant, décroît d'une unité avec pour effet que :
- lorsque la nouvelle capacité de transit *I*_{*i*}(*t*); dite aussi état successeur, est nulle, le serveur *s*_{*i*}(*t*) reste en sommeil du fait qu'il n'a plus de tampon mémoire,
- lorsque la nouvelle capacité de transit *I*_{*i*}(*t*) est positive, l'événement dit "serveur demandé" (*sd*) est déclenché, ce qui correspond au positionnement du bit de statut (*d*) du serveur *s*_{*i*}(*t*) par le processus de synchronisation du couple serveur-usager *C*(*s*_{*i*}(*t*),*u*_{*i*}(*t*)),
- de plus, lorsque la nouvelle capacité de transit *I*_{*i*}(*t*) est égale à *n*_{*i*}(*t*) - 1 tampons mémoires, l'événement dit "usager demandé" (*ud*) est également déclenché, ce qui correspond au positionnement du bit de statut (*d*) de l'usager *u*_{*i*}(*t*) par le processus de synchronisation du couple serveur-usager *C*(*s*_{*i*}(*t*),*u*_{*i*}(*t*)) ;
· deuxièmement, lorsque l'usager *u*_{*i*}(*t*) positionne son bit de contrôle (*t*), ce qui correspond à un événement dit "tampon vide" (*tv*), la capacité de transit *I*_{*i*}(*t*), dite aussi état courant, croît d'une unité avec pour effet que :
- lorsque la nouvelle capacité de transit *I*_{*i*}(*t*), dite aussi état successeur, est égale à *n*_{*i*}(*t*) tampons mémoires, l'usager *u*_{*i*}(*t*) reste en sommeil du fait qu'il n'a plus de tampon mémoire,
- lorsque la nouvelle capacité de transit *I*_{*i*}(*t*) est inférieure à *n*_{*i*}(*t*) tampons mémoires, l'événement dit "usager demandé" (*ud*) est déclenché, ce qui correspond au positionnement du bit de statut (*d*) de l'usager *u*_{*i*}(*t*) par le processus de synchronisation du couple serveur-usager *C*(*s*_{*i*}(*t*),*u*_{*i*}(*t*)),
- de plus, lorsque la nouvelle capacité de transit *I*_{*i*}(*t*) est égale à 1 tampon mémoire, l'événement dit "serveur demandé" (*sd*) est également déclenché, ce qui correspond au positionnement du bit de statut (*d*) du serveur *s*_{*i*}(*t*) par le processus de synchronisation du couple serveur-usager *C*(*s*_{*i*}(*t*),*u*_{*i*}(*t*));
· troisièmement, lorsque le serveur *s*_{*i*}(*t*) et l'usager *u*_{*i*}(*t*) positionnent simultanément leur bit de contrôle (*t*), ce qui correspond aux événements dits "tampon plein" (*tp*) et "tampon vide" (*tv*), la capacité de transit *I*_{*i*}(*t*), dite aussi état courant, reste inchangée avec pour effet que les événements dits "serveur demandé" (*sd*) et "usager demandé" (*ud*) sont simultanément déclenchés, ce qui correspond respectivement au positionnement du bit de statut (*d*) du serveur *s*_{*i*}(*t*) et au positionnement du bit de statut (*d*) de l'usager *u*_{*i*}(*t*) par le processus de synchronisation du couple serveur-usager *C*(*s*_{*i*}(*t*),*u*_{*i*}(*t*)) ;
· quatrièmement, lorsque le processus de synchronisation du couple serveur-usager *C*(*s*_{*i*}(*t*),*u*_{*i*}(*t*)) est initialisé, la capacité de transit *I*_{*i*}(*t*), dite aussi état courant est égale à *n*_{*i*}(*t*) tampons mémoires et l'événement dit "serveur demandé" (*sd*) est déclenché, ce qui correspond au positionnement du bit de statut (*d*) du serveur *s*_{*i*}(*t*) par le processus de synchronisation du couple serveur-usager *C*(*s*_{*i*}(*t*),*u*_{*i*}(*t*)).

6. Procédé de communication selon les revendications **1** et **2** caractérisé en ce que la matrice des transitions d'états du couple serveur-usager *C*(*s*_{*i*}(*t*),*u*_{*i*}(*t*)) décrit de plus pour chaque changement de capacité de transit *I*_{*i*}(*t*) ou transition d'états que :
· premièrement, lorsque la nouvelle capacité de transit *I*_{*i*}(*t*), dite aussi état successeur, est supérieure ou égale au seuil de capacité de transit de *m*_{*i*}(*t*) tampons mémoires avec *m*_{*i*}(*t*) ≧ 3, la variable binaire (*ve*₄₈) est annulée pour traduire que les émissions des trames propres de la station *S*_{*i*} sont validées, ce qui correspond à l'annulation du bit de statut (*e*) par le processus de synchronisation du couple serveur-usager *C*(*s*_{*i*}(*t*),*u*_{*i*}(*t*)), sinon la variable binaire (*ve*₄₈) est positionnée pour traduire que les émissions des trames propres de la station *S*_{*i*} sont invalidées, ce qui correspond au positionnement du bit de statut (*e*) par le processus de synchronisation du couple serveur-usager *C*(*s*_{*i*}(*t*),*u*_{*i*}(*t*));
· deuxièmement, lorsque la nouvelle capacité de transit *I*_{*i*}(*t*), dite aussi état successeur, est supérieure ou égale au seuil de capacité de transit de 2 tampons mémoires, la variable binaire (*vp*₄₇) est annulée pour traduire que les émissions et les retransmissions des trames de la station précédente S_{*i*}₋₁ sont validées, ce qui correspond à l'annulation du bit de statut (*p*) de la station *S*_{*i*} et à l'émission sur la voie de signalisation (*Vs*) d'un signal de niveau bas par le processus de synchronisation du couple serveur-usager *C*(*s*_{*i*}(*t*),*u*_{*i*}(*t*)), ledit signal de niveau bas annulant le bit de statut (*s*) de la station précédente *S*_{*i*}₋₁, sinon la variable binaire (*vp₄*₇) est positionnée pour traduire que les émissions et les retransmissions des trames de la station précédente *S*_{*i*}₋₁ sont invalidées, ce qui correspond au positionnement du bit de statut (*p*) de la station *S*_{*i*} et à l'émission sur la voie de signalisation (*Vs*) d'un signal de niveau haut par le processus de synchronisation du couple serveur-usager *C*(*s*_{*i*}(*t*),*u*_{*i*}(*t*)), ledit signal de niveau haut positionnant le bit de statut (*s*) de la station précédente *S*_{*i*}₋₁.

7. Réseau local de communication à accès multiples par régulation distribuée de trafic mettant en oeuvre le procédé de communication selon les revendications **1** à **6** constitué de *k* stations, *k* ≧ 2, émettrices et/ou réceptrices, lesdites stations étant reliées l'une à l'autre en série par une voie de transmission de données (*Vd*) et une voie de signalisation (*Vs*) unidirectionnelles et de sens contraires pour former un anneau de *k* stations caractérisé en ce que chacune des stations *S*_{*i*}, 1 ≦ *i* ≦ *k* comprend :
· des premiers moyens de réception et de retransmission utilisant le processus serveur *s*_{*i*}(*t*) et le processus usager *u*_{*i*}(*t*) en leur permettant de partager *n*_{*i*}(*t*) tampons mémoires avec *n*_{*i*}(*t*) ≧ 3, de sorte que lorsque la station *S*_{*i*} est dans l'état ouvert, lesdits processus réceptionnent et retransmettent les trames en transit;
· des seconds moyens de synchronisation synchronisant le processus serveur *s*_{*i*}(*t*) et le processus usager *u*_{*i*}(*t*) en fonction de la capacité de transit *I*_{*i*}(*t*) de la station *S*_{*i*} et comparant ladite capacité de transit aux deux seuils de capacité de transit de la station *S*_{*i*} de sorte que lorsque la station *S*_{*i*} est dans l'état ouvert :
- d'une part, lesdits moyens autorisent la station *S*_{*i*} à émettre sur la voie de données (*Vd*) une trame propre lorsque sa capacité de transit *I*_{*i*}(*t*) est supérieure ou égale au premier seuil de capacité de transit fixé à *m*_{*i*}(*t*) tampons mémoires avec 3 ≦ *m*_{*i*}(*t*) ≦ *n*_{*i*}(*t*), sinon lesdits moyens autorisent la station *S*_{*i*} à émettre une trame en transit, ladite trame en transit étant retransmise par le processus usager *u*_{*i*}(*t*),
- d'autre part, lesdits moyens émettent sur la voie de signalisation (*Vs*) un signal de niveau haut lorsque la capacité de transit *I*_{*i*}(*t*) de la station *S*_{*i*} est inférieure ou égale au second seuil de capacité de transit fixe à un tampon mémoire, sinon lesdits moyens émettent un signal de niveau bas;
· des troisièmes moyens de commutation réalisant les changements d'état d'insertion de la station *S*_{*i*} de sorte que :
- lorsque la station *S*_{*i*} est dans l'état fermé, lesdits moyens permettent à la station *S*_{*i*} de passer dans l'état ouvert lorsqu'elle a au moins une trame en attente d'émission ou lorsqu'elle détecte sur la voie de signalisation (*Vs*) un signal de niveau haut venant de la station suivante *S*_{*i*}₊₁,
- lorsque la station *S*_{*i*} est dans l'état ouvert, lesdits moyens permettent à la station *S*_{*i*} de passer dans l'état fermé lorsqu'elle n'a plus de trame en attente d'émission et lorsqu'elle détecte sur la voie de signalisation (*Vs*) un signal de niveau bas venant de la station suivante *S*_{*i*}₊₁.

8. Réseau local de communication selon la revendication **7** caractérisé en ce que les premiers moyens dits de réception et de retransmission d'une station *S*_{*i*}, 1 ≦ *i* ≦ *k* comprennent :
· un processeur *P*_{*rt*} (52) dans lequel se déroule le processus serveur *s*_{*i*}(*t*), ledit processeur *P*_{*rt*} (52) ayant un bit de statut (*d*) et un bit de contrôle (*t*) pour ledit processus serveur;
· un processeur *P*_{*et*} (53) dans lequel se déroule le processus usager *u*_{*i*}(*t*), ledit processeur *P*_{*et*} (53) ayant un bit de statut (*d*) et un bit de contrôle (*t*) pour ledit processus usager et ayant de plus les trois bits de statut (*e*), (*s*) et (*p*);
· une mémoire (*M*) à accès multiples acceptant *n*_{*i*}(*t*) tampons mémoires avec *n*_{*i*}(*t*) ≧ 3;
· un coupleur de communication (*I*).

9. Réseau local de communication selon la revendication **7** caractérisé en ce que les seconds moyens dits de synchronisations d'une station *S*_{*i*}, 1 ≦ *i* ≦ *k* sont constitués par un circuit séquentiel *E*(*s*_{*i*}(*t*),*u*_{*i*}(*t*)) (4) réalisant les fonctionnalités décrites par la matrice des transitions d'états du couple serveur-usager *C*(*s*_{*i*}(*t*),*u*_{*i*}(*t*)), ledit circuit séquentiel comprenant :
- une entrée (40) d'initialisation,
- une entrée (41) recevant les impulsions déclenchées par le positionnement du bit de contrôle (*t*) du serveur *s*_{*i*}(*t*),
- une entrée (42) recevant les impulsions déclenchées par le positionnement du bit de contrôle (*t*) de l'usager *u*_{*i*}(*t*),
- une sortie (43) fournissant les impulsions qui positionnent le bit de statuts (*d*) du serveur *s*_{*i*}(*t*) afin de demander son réveil,
- une sortie (44) fournissant les impulsions qui positionnent le bit de statut (*d*) de l'usager *u*_{*i*}(*t*) afin de demander son réveil,
- une sortie (45) fournissant les signaux qui conditionnent les changements d'états d'insertion de la station *S*_{*i*},
- une sortie (47) fournissant sur la voie de signalisation (*Vs*) un signal de niveau haut tant que la capacité de transit *I*_{*i*}(*t*) de la station *S*_{*i*} est inférieure ou égale au second seuil de capacité de transit fixé à un tampon mémoire ou un signal de niveau bas dans le cas contraire, ledit signal de niveau haut positionnant le bit de statut (*p*) de la station *S*_{*i*} et le bit de statut (*s*) de la station précédente *S*_{*i*}₋₁ afin de mémoriser l'invalidation des émissions et des retransmissions de la station *S*_{*i*}₋₁ et ledit signal de niveau bas annulant lesdits bits de statut afin de mémoriser la validation des émissions et des retransmissions de la station *S*_{*i*}₋₁,
- une sortie (48) fournissant un signal de niveau bas tant que la capacité de transit *I*_{*i*}(*t*) de la station *S*_{*i*} est supérieure ou égale au premier seuil de capacité de transit fixé à *m*_{*i*}(*t*) tampons mémoires avec 3 ≦ *m*_{*i*}(*t*) ≦ *n*_{*i*}(*t*) ou un signal de niveau haut dans le cas contraire, ledit signal de niveau bas annulant le bit de statut (*e*) de la station *S*_{*i*} afin de valider l'émission d'une trame propre et ledit signal de niveau haut positionnant le bit de statut (*e*) afin d'invalider l'émission des trames propres.

10. Réseau local de communication selon la revendication **7** caractérisé en ce que les troisièmes moyens dits de commutation d'une station *S*_{*i*}, 1 ≦ *i* ≦ *k* comprennent :
· un processeur *P*_{*rt*} (52) dans lequel se déroule le processus serveur *s*_{*i*}(*t*), ledit processeur *P*_{*rt*} (52) ayant un bit de statut (*f*),
· un processeur *P*_{*et*} (53) dans lequel se déroule le processus usager *u*_{*i*}(*t*), ledit processeur *P*_{*et*} (53) ayant un bit de statut (*f*),
· un coupleur de communication (*I*) avec une entrée (71) et une sortie (72), de sorte que :
· d'une part, lorsque la station *S*_{*i*} dans l'état fermé remplit l'une des conditions pour passer dans l'état ouvert, un signal de niveau haut est fourni à l'entrée (71) du coupleur de communication (*I*) de sorte que la station *S*_{*i*} passe dans l'état ouvert dès que la logique de réception du coupleur de communication (*I*) est inactive ou dès qu'il a émis un délimiteur de fin de trame (*ED*) suite à la reconnaissance d'un délimiteur de début de trame (*SD*), ledit coupleur de communication dans l'état ouvert fournissant sur sa sortie (72) un signal de niveau bas qui annule le bit de statut (*f*) du processeur *P*_{*rt*} (52) et le bit de statut (*f*) du processeur *P*_{*et*} (53) de la station *S*_{*i*} afin de mémoriser le passage dans l'état ouvert de la station *S*_{*i*};
· d'autre part, lorsque la station *S*_{*i*} dans l'état ouvert remplit toutes les conditions pour passer dans l'état fermé, un signal de niveau bas est fourni à l'entrée (71) du coupleur de communication (*I*) de sorte que la station *S*_{*i*} passe dans l'état fermé dès que la logique de réception du coupleur de communication (*I*) est inactive, ledit coupleur de communication dans l'état fermé fournissant sur sa sortie (72) un signal de niveau haut qui positionne le bit de statut (*f*) du processeur *P*_{*rt*} (52) et le bit de statut (*f*) du processeur *P*_{*et*} (53) de la station *S*_{*i*} afin de mémoriser le passage dans l'état fermé de la station *S*_{*i*}.

## Claims

1. Communications method for *k*,*k ≧* 2 transmitting and/or receiving stations linked one to the other in series by a data channel (***Vd***) and a signaling channel (***Vs***), which are unidirectional and of opposite direction, using for each of the stations *S*_{*i*}, 1 ≦ *i* ≦ *k*, a synchronization method for two processes that share *n,n* ≧ 2 buffers, enabling distributed traffic flow using the signaling channel (***Vs***) such that the stations treated as equals simultaneously access the data channel (***Vd***) without loss of information and without deadlock, in which :
· first, frames are of constant or variable length with an individual or group destination address;
· second, each of the stations *S*_{*i*}, 1≦*i*≦*k*, has two insertion modes :
- station *S*_{*i*} is in closed mode when it receives and repeats to the following station *S*_{*i*}₊₁ the bits of frames from the preceding station *S*_{*i*}₋₁, given that among frames received the station ignores frames for which it is not the destination station,
- station *S*_{*i*} is in open mode when it only receives bits of frames from the preceding station *S*_{*i*}₋₁, given that among frames received it stores in transit frames for which it is not the destination station;
· third, each of the stations *S*_{*i*}, 1≦*i*≦*k,* in open mode, suspends the transmission and retransmission of frames when it detects on the signaling channel (***Vs***) a high level signal from the following station *S*_{*i*}₊₁, at latest at the end of any transmission or retransmission that may be in progress, station *S*_{*i*} resuming its transmissions and retransmissions when it detects a low level signal on the signaling channel (***Vs***);
CHARACTERIZED IN THAT :
· first, each of the stations *S*_{*i*}, 1≦*i*≦*k,* in open mode, receives and retransmits frames that transit using two processes that share *n*_{*i*}(*t*) buffers with *n*_{*i*}(*t*) ≧ 3, one of the processes, known as the server *s*_{*i*}(*t*), filling each of the buffers with a frame from the preceding station *S*_{*i*}₋₁ and the other process, known as the user *u*_{*i*}(*t*), emptying each buffer by retransmitting its frame to the following station *S*_{*i*}₊₁, given that :
- the nominal transit capacity of a station *S*_{*i*} is the number *n*_{*i*}(*t*) of buffers shared by the server *s*_{*i*}(*t*) and the user *u*_{*i*}(*t*), in other words, the nominal transit capacity is the maximum number of frames in transit that the station *S*_{*i*} can accept,
- the transit capacity *I*_{*i*}(*t*) of a station *S*_{*i*} is the number of buffers available to the server *s*_{*i*}(*t*) at a given instant, in other words, the transit capacity is the number of additional frames in transit that station *S*_{*i*} can still accept, at a given instant,
- a frame in transit in a station *S*_{*i*} is a frame stored in a buffer available to the user *u*_{*i*}(*t*), in other words, a frame in transit is a completely received frame waiting for retransmission or currently being retransmitted ;
· second, each of the stations *S*_{*i*}, 1≦*i*≦*k,* has two transit capacity thresholds that condition the station's behavior according to the transit capacity *I*_{*i*}(*t*), such that :
- the first transit capacity threshold, known as the transmission threshold, being set at *m*_{*i*}(*t*) buffers or frames with *m*_{*i*}(*t*) ≦ *n*_{*i*}(*t*) and station *S*_{*i*} being in open mode without detecting a high level signal on the signaling channel (***Vs***), if the transit capacity *I*_{*i*}(*t*) of station *S*_{*i*} is greater than or equal to *m*_{*i*}(*t*) buffers, station *S*_{*i*} transmits a frame constituted by itself, known as an own frame, of maximum length or not, otherwise station *S*_{*i*} transmits a frame in transit,
- the second transit capacity threshold being set at 1 buffer or frame and station *S*_{*i*} being in open mode, if the transit capacity *I*_{*i*}(*t*) of station *S*_{*i*} decreases to 1 buffer, station *S*_{*i*} transmits a high level signal on the signaling channel (**Vs**) such that it will be able to accept any last frame still being transmitted or retransmitted by the preceding station *S*_{*i*}₋₁ before the latter suspends its transmissions and retransmissions, station *S*_{*i*} maintaining said high level signal as long as its transit capacity *I*_{*i*}(*t*) has not increased to 2 buffers, otherwise station *S*_{*i*} transmits a low level signal,
- the transmission threshold is set at *m*_{*i*}(*t*) buffers or frames with *m*_{*i*}(*t*) ≧ 3 such that frames inserted on the data channel (**Vd**) circulate from one station to the next until they are removed, no matter what their length and type of addressing, without deadlock of said stations;
· third, each of the stations *S*_{*i*}, 1≦*i*≦*k* is capable of :
- changing from closed mode to open mode when it has at least one frame waiting for transmission or when it detects a high level signal on the signaling channel (**Vs**),
- changing from open mode to closed mode when it has no more frames waiting for transmission and when it detects a low level signal on the signaling channel (**Vs**);
· fourth, each of the stations *S*_{*i*}, 1≦*i*≦*k*, in closed mode, sets the bit known as the frame to destroy *FD* bit in the frame status (***FS***) field to 1 in valid frames that are only destined to that station or that the station has transmitted itself, a frame with the frame to destroy bit set being removed from the data channel (***Vd***) by the first station in open mode to receive it.

2. Communications method according to claim **1**
CHARACTERIZED IN THAT
each of the stations *S*_{*i*}, 1≦*i*≦*k*, in closed mode, which has at least one frame waiting for transmission or which detects a high level signal on the signaling channel (***Vs***) changes to open mode :
· either between two consecutive frame passages,
· or during the bit-by-bit retransmission of a frame, after transmission of a frame end delimiter (***ED***) following recognition of a frame start delimiter (***SD***), station *S*_{*i*} having interrupted the bit-by-bit retransmission of said frame upon recognition of said frame end delimiter (***ED***).

3. Communications method according to claim **1**
CHARACTERIZED IN THAT
each of the stations *S*_{*i*}, 1≦*i*≦*k*, in open mode, which has no more frames waiting for transmission and which detects a low level signal on the signaling channel (***Vs***) changes to closed mode at latest at the end of any reception that may be in progress.

4. Communications method according to claim **1**
CHARACTERIZED IN THAT
the server *s*_{*i*}(*t*) and the user *u*_{*i*}(*t*), each having a control bit (***t***) and a status bit (***d***), are synchronized by a third process whose functionalities are described by a matrix of state transitions, known as the state transitions matrix of the server-user couple *C*(*s*_{*i*}(*t*),*u*_{*i*}(*t*)) and which is implemented by a sequential circuit known as the sequential circuit *E*(*s*_{*i*}(*t*),*u*_{*i*}(*t*)) (**4**), such that :
· first, each of the two server *s*_{*i*}(*t*) and user *u*_{*i*}(*t*) processes sets its control bit (***t***) and goes to sleep whenever it has filled or emptied a buffer, said control bit (***t***) being cleared by an impulse triggered by its writing;
· second, whenever the control bit (***t***) of the server *s*_{*i*}(*t*) and/or the control bit (***t***) of the user *u*_{*i*}(*t*) is set, in conformance with the state transitions matrix of the server-user couple *C*(*s*_{*i*}(*t*),*u*_{*i*}(*t*)) :
- the synchronization process updates the transit capacity *I*_{*i*}(*t*) and decides to wake the server *s*_{*i*}(*t*) and/or user *u*_{*i*}(*t*) by setting their status bit (***d***) in conformance with the new transit capacity *I*_{*i*}(*t*),
- the synchronization process sets or clears a status bit (***e***) in station *S*_{*i*} in conformance with the new transit capacity *I*_{*i*}(*t*), said status bit (***e***) validating or invalidating in this manner the transmission of own frames of the station *S*_{*i*},
- using the signaling channel (***Vs***) the synchronization process sets or clears a status bit (***s***) in the preceding station *S*_{*i*}₋₁ in conformance with the new transit capacity *I*_{*i*}(*t*), said status bit (***s***) validating or invalidating in this manner the transmissions and retransmissions of the preceding station *S*_{*i*}₋₁;
· third, each of the two server *s*_{*i*}(*t*) and user *u*_{*i*}(*t*) processes can be awoken when its status bit (***d***) is set, said status bit (***d***) being cleared by reading after having been set by an impulse.

5. Communications method according to claims **1** and **2**
CHARACTERIZED IN THAT
the state transitions matrix of the server-user couple *C*(*s*_{*i*}(*t*),*u*_{*i*}(*t*)) describes that :
· first, when the server *s*_{*i*}(*t*) sets its control bit (***t***), which corresponds to an event known as "full buffer" (***tp***), the transit capacity *I*_{*i*}(*t*), also known as the current state, decreases by one unit with the result that :
- when the new transit capacity *I*_{*i*}(*t*), also known as the successor state, is null, the server *s*_{*i*}(*t*) remains asleep since it has no more buffers,
- when the new transit capacity *I*_{*i*}(*t*) is positive an event known as "server requested" (***sd***) is triggered, which corresponds to the setting of the status bit (***d***) of the server *s*_{*i*}(*t*) by the synchronization process of the server-user couple *C*(*s*_{*i*}(*t*),*u*_{*i*}(*t*)),
- in addition, when the new transit capacity *I*_{*i*}(*t*) is equal to *n*_{*i*}(*t*)-1 buffers, the event known as "user requested" (***ud***) is also triggered, which corresponds to the setting of the status bit (***d***) of the user *u*_{*i*}(*t*) by the synchronization process of the server-user couple *C*(*s*_{*i*}(*t*),*u*_{*i*}(*t*));
· second, when the user *u*_{*i*}(*t*) sets its control bit (***t***), which corresponds to an event known as "empty buffer" (***tv***), the transit capacity *I*_{*i*}(*t*), also known as the current state, increases by one unit with the result that :
- when the new transit capacity *I*_{*i*}(*t*), also known as the successor state, is equal to *n*_{*i*}(*t*) buffers, the user *u*_{*i*}(*t*) remains asleep since it has no more buffers,
- when the new transit capacity *I*_{*i*}(*t*) is less than *n*_{*i*}(*t*) buffers, an event known as "user requested" (***ud***) is triggered, which corresponds to the setting of the status bit (***d***) of the user *u*_{*i*}(*t*) by the synchronization process of the server-user couple *C*(*s*_{*i*}(*t*),*u*_{*i*}(*t*)),
- in addition, when the new transit capacity *I*_{*i*}(*t*) is equal to 1 buffer, the event known as "server requested" (***sd***) is also triggered, which corresponds to the setting of the status bit (***d***) of the server *s*_{*i*}(*t*) by the synchronization process of the server-user couple *C*(*s*_{*i*}(*t*),*u*_{*i*}(*t*));
· third, when the server *s*_{*i*}(t) and the user *u*_{*i*}(*t*) simultaneously set their control bit (***t***), which corresponds to the events known as "full buffer" (***tp***) and "empty buffer" (***tv***), the transit capacity *I*_{*i*}(*t*), also known as the current state, remains unchanged with the effect that the events known as "server requested" (***sd***) and "user requested" (***ud***) are simultaneously triggered, which corresponds respectively to the setting of the server *s*_{*i*}(*t*) status bit (***d***) and the user *u*_{*i*}(*t*) status bit (***d***) by the synchronization process of the server-user couple *C*(*s*_{*i*}(*t*),*u*_{*i*}(*t*));
· fourth, when the synchronization process of the server-user couple *C*(*s*_{*i*}(*t*),*u*_{*i*}(*t*)) is initialized, the transit capacity *I*_{*i*}(*t*), also known as the current state, is equal to *n*_{*i*}(*t*) buffers and the "server requested" (***sd***) event is triggered, which corresponds to the setting of the server *s*_{*i*}(*t*) status bit (***d***) by the synchronization process of the server-user couple *C*(*s*_{*i*}(*t*),*u*_{*i*}(*t*)).

6. Communications method according to claims **1** and **2**
CHARACTERIZED IN THAT
the state transitions matrix of the server-user couple *C*(*s*_{*i*}(*t*),*u*_{*i*}(*t*)) also describes for each transit capacity change or state transition that :
· first, when the new transit capacity *I*_{*i*}(*t*), also known as the successor state, is greater than or equal to the transit capacity threshold of *m*_{*i*}(*t*) buffers, with *m*_{*i*}(*t*) ≧ 3, the binary variable (***ve***₄₈) is cleared to indicate that transmissions of own frames of the station *S*_{*i*} are validated, which corresponds to the clearing of the status bit (***e***) by the synchronization process of the server-user couple *C*(*s*_{*i*}(*t*),*u*_{*i*}(*t*)), otherwise the binary variable (***ve***₄₈) is set to indicate that the transmissions of own frames of the station *S*_{*i*} are invalidated, which corresponds to the setting of the status bit (***e***) by the synchronization process of the server-user couple *C*(*s*_{*i*}(*t*),*u*_{*i*}(*t*));
· second, when the new transit capacity *I*_{*i*}(*t*), also known as the successor state, is greater than or equal to the transit capacity threshold of 2 buffers, the binary variable (***vp*****₄**₇) is cleared to indicate that the transmissions and retransmissions of the preceding station *S*_{*i*}₋₁ are validated, which corresponds to the clearing of status bit (***p***) of station *S*_{*i*} and transmission on the signaling channel (***Vs***) of a low level signal by the synchronization process of the server-user couple *C*(*s*_{*i*}(*t*),*u*_{*i*}(*t*)), said low level signal clearing the status bit (***s***) of the preceding station *S*_{*i*}₋₁, otherwise the binary variable (***vp***₄₇) is set to indicate that the transmissions and retransmissions of the preceding station *S*_{*i*}₋₁ are invalidated, which corresponds to the setting of the status bit (***p***) of station *S*_{*i*} and the transmission on the signaling channel (***Vs***) of a high level signal by the synchronization process of the server-user couple *C*(*s*_{*i*}(*t*),*u*_{*i*}(*t*)), said high level signal setting the status bit (***s***) of the preceding station *S*_{*i*}₋₁.

7. Local area network with multiple access by distributed traffic control implementing the communications method according to claims **1** through **6** made up of *k,k* ≧ 2, transmitting and/or receiving stations, said stations being linked one to the other in series by a data transmission channel (***Vd***) and a signaling channel (***Vs***), which are unidirectional and of opposite direction, to form a ring of *k* stations
CHARACTERIZED IN THAT :
each of the stations *S*_{*i*}, 1 ≦ *i* ≦ *k* includes :
· first means of receiving and retransmitting that use the server *s*_{*i*}(*t*) process and the user *u*_{*i*}(*t*) process by allowing them to share *n*_{*i*}(*t*) buffers with *n*_{*i*}(*t*) ≧ 3, such that when station *S*_{*i*} is in open mode, said processes receive and retransmit the frames in transit;
· second means of synchronization that synchronize the server *s*_{*i*}(*t*) process and the user *u*_{*i*}(*t*) process according to the transit capacity *I*_{*i*}(*t*) of station *S*_{*i*} and comparing said transit capacity with the two transit capacity thresholds of station *S*_{*i*} such that when station *S*_{*i*} is in open mode :
- said means authorize station *S*_{*i*} to transmit on the data channel (***Vd***) an own frame when its transit capacity *I*_{*i*}(*t*) is greater than or equal to the first transit capacity threshold set at *m*_{*i*}(*t*) buffers with 3≦*m*_{*i*}(*t*)≦*n*_{*i*}(*t*), otherwise said means authorize station *S*_{*i*} to transmit a frame in transit, said frame in transit being retransmitted by the user *u*_{*i*}(*t*) process,
- said means transmit on the signaling channel (***Vs***) a high level signal when the transit capacity *I*_{*i*}(*t*) of station *S*_{*i*} is less than or equal to the second transit capacity threshold set at one buffer, otherwise said means transmit a low level signal;
· third means of commutation that cause insertion mode changes of station *S*_{*i*} such that :
- when station *S*_{*i*} is in closed mode, said means allow station *S*_{*i*} to change to open mode when it has at least one frame waiting for transmission or when it detects on the signaling channel (***Vs***) a high level signal from the following station *S*_{*i*}₊₁,
- when station *S*_{*i*} is in open mode, said means allow station *S*_{*i*} to change to closed mode when it has no more frames waiting for transmission and when it detects on the signaling channel (***Vs***) a low level signal from the following station *S*_{*i*}₊₁.

8. Local area network according to claim **7**
CHARACTERIZED IN THAT
the first means, known as the reception and retransmission means, of a station *S*_{*i*}, 1≦*i*≦*k* include :
· a processor *P*_{*rt*} (**52**) in which the server *s*_{*i*}(*t*) process is loaded, said processor *P*_{*rt*} (**52**) having a status bit (***d***) and a control bit (***t***) for said server process;
· a processor *P*_{*et*} (**53**) in which the user *u*_{*i*}(*t*) process is loaded, said processor *P*_{*et*} (**53**) having a status bit (***d***) and a control bit (***t***) for said user process and also having the three status bits (***e***), (***s***) and (***p***);
· a multiple access memory (***M***) that accepts *n*_{*i*}(*t*) buffers with *n*_{*i*}(*t*)≧3;
· a communications coupler (***I***).

9. Local area network according to claim **7**
CHARACTERIZED IN THAT
the second means, known as the synchronization means of a station *S*_{*i*}, 1≦*i*≦*k* are made up of a sequential circuit *E*(*s*_{*i*}(*t*),*u*_{*i*}(*t*)) (**4**) that performs the functionalities described by the state transitions matrix of the server-user couple *C*(*s*_{*i*}(*t*),*u*_{*i*}(*t*)), said sequential circuit including :
· an initialization input (**40**);
· an input (**41**) that receives the impulses triggered by setting the control bit (***t***) of the server *s*_{*i*}(*t*);
· an input (**42**) that receives the impulses triggered by setting the control bit (***t***) of the user *u*_{*i*}(*t*);
· an output (**43**) that provides the impulses that set the server *s*_{*i*}(*t*) status bit (***d***) in order to request its awakening;
· an output (**44**) that provides the impulses that set the user *u*_{*i*}(*t*) status bit (***d***) in order to request its awakening;
· an output (**45**) that provides the signals that condition insertion mode changes of station *S*_{*i*};
· an output (**47**) that provides on the signaling channel (***Vs***) a high level signal as long as the transit capacity *I*_{*i*}(*t*) of station *S*_{*i*} is less than or equal to the second transit capacity threshold set at one buffer or a low level signal otherwise, said high level signal setting the status bit (***p***) of station *S*_{*i*} and the status bit (***s***) of the preceding station *S*_{*i*}₋₁ in order to memorize the invalidation of the transmissions and retransmissions of the station *S*_{*i*}₋₁ and said low level signal clearing said status bits in order to memorize the validation of the transmissions and retransmissions of station *S*_{*i*}₋₁;
· an output (**48**) that provides a low level signal as long as the transit capacity *I*_{*i*}(*t*) of station *S*_{*i*} is greater than or equal to the first transit capacity threshold set at *m*_{*i*}(*t*) buffers with 3 ≦ *m*_{*i*}(*t*) ≦ *n*_{*i*}(*t*) or a high level signal otherwise, said low level signal clearing the status bit (***e***) of station *S*_{*i*} in order to validate the transmission of an own frame and said high level signal setting the status bit (***e***) in order to invalidate the transmission of own frames.

10. Local area network according to claim **7**
CHARACTERIZED IN THAT
the third means, known as the commutation means of a station *S*_{*i*}, 1 ≦ *i* ≦ *k* include :
· a processor *P*_{*rt*} (**52**) in which the server *s*_{*i*}(*t*) process is loaded, said processor *P*_{*rt*} (**52**) having a status bit (***f***);
· a processor *P*_{*et*} (**53**) in which the user *u*_{*i*}(*t*) process is loaded, said processor *P*_{*et*} (**53**) having a status bit (***f***);
· a communication coupler (***I***) with an input (**71**) and an output (**72**); such that :
- when station *S*_{*i*} in closed mode fulfills one of the conditions for changing to open mode, a high level signal is supplied to the input (**71**) of the communications coupler (***I***) such that station *S*_{*i*} changes to open mode as soon as the reception logic of the communications coupler (***I***) is inactive or as soon as it has transmitted a frame end delimiter (***ED***) following recognition of a frame start delimiter (***SD***), said communications coupler in open mode providing at its output (**72**) a low level signal that clears the status bit (***f***) of the processor *P*_{*rt*} (**52**) and the status bit (***f***) of processor *P*_{*et*} (**53**) of station *S*_{*i*} in order to memorize the change to open state of station *S*_{*i*};
- when station *S*_{*i*} in open mode fulfills all conditions for changing to closed mode, a low level signal is provided at the input (**71**) of the communications coupler (***I***) such that station *S*_{*i*} changes to closed mode as soon as the reception logic of the communications coupler (***I***) is inactive, said communications coupler in closed mode providing at its output (**72**) a high level signal that sets the status bit (***f***) of processor *P*_{*rt*} (**52**) and the status bit (***f***) of processor *P*_{*et*} (**53**) of station *S*_{*i*} in order to memorize the change to closed mode of station *S*_{*i*}.

## Patentansprüche

1. Kommunikationsverfahren für k,k ≧ 2 Sende- und/oder Empfangsstationen, untereinander serienweise durch einen Datenweg (*Vd*) und einen Signalweg (*Vs*) verbunden, die jede in eine eigene und gegengesetzte Richtung verlaufen, wobei das Kommunikationsverfahren für jede der Stationen *Si*,*1* ≦ *i* ≦ *k* eine Synchronisiermethode für beide Verfahren benutzt, die sich *n, n* ≧ 2 Pufferspeicher teilen, welche eine mittels des Signalwegs (*Vs*) verteilte Regulation des Verkehrs ermöglichen, und zwar auf eine Weise, daß die ebenbürtig behandelten Stationen gleichzeitig Zugang zu den Datenwegen (*Vd*) ohne Verlust von Informationen und ohne sich gegenseitig zu blockieren erhalten; in welchem :
. erstens die Raster eine konstante oder variable Länge mit einer individuellen oder gruppierten Bestimmungsadresse haben :
. zweitens jede der Stationen *Si*,*1* ≦ *i* ≦ *k* zwei Einschubzustände hat :
- eine Station *Si* befindet sich in *geschlossenem* Zustand, wenn sie die Rasterbits empfängt und an die nächste Station *Si+1* weiterleitet, die von der vorausgegangenen Station *Si-1* kommen, wobei zu wissen ist, daß sie innerhalb der empfangenen Raster diejenigen Raster ignoriert, die nicht für sie bestimmt sind,
- eine Station *Si* befindet sich in *offenem* Zustand, wenn sie ausschließlich die von der vorherigen Station *Si-1* kommenden Rasterbits empfängt, wobei zu wissen ist, daß sie innerhalb der empfangenen Raster diejenigen Raster als Transit einordnet, die nicht für sie bestimmt sind :
. drittens jede der Stationen *Si,1 ≦i* ≦*k* in offenem Zustand die Sendung und Weitervermittlung ihrer Raster aufschiebt, wenn sie auf dem Signalweg (*V*s) ein Signal höherer Ebene spätestens am Ende der Sendung oder während der eventuell laufenden Weitervermittlung aufspürt, das von der nächsten Station *Si+1* kommt, wobei die Station *Si* ihre Sendungen und ihre Weitervermittlungen wieder aufinmmt, wenn sie auf dem Signalweg (*Vs*) erneut ein Signal niederer Ebene aufspürt;
dadurch gekennzeichnet, daß :
. erstens, jede der Stationen *Si,1* ≦ *i* ≦ *k*, in offenem Zustand, die Raster empfängt und weiterleitet, die mittels zwei sich *ni* (*t*) Pufferspeicher mit *ni* (*t*) ≧ 3 teilender Verfahren im Transit durchlaufen, wobei eines der Verfahren genannt Server *si*(*t*) jeden der Pufferspeicher mit einem von der vorausgegangenen Station *Si-1* kommenden Raster füllt, während das andere Nutzer *ui*(*t*) genannte Verfahren diesen Pufferspeicher leert, indem es seinen Raster an die nächste Station *Si+1* weitergibt,
wobei zu wissen ist, daß :
- die *Nominaltransitkapazität* einer Station *Si* der Anzahl von *ni*(*t*) Pufferspeichern entspricht, die sich der Server *si*(*t*) und der Nutzer *ui*(*t*) teilen: anders gesagt entspricht die Nominaltransitkapazität der Höchstzahl von Rastern im Transit, die die Station *Si* akzeptieren kann,
- die *Transitkapazität Ii*(*t*) einer Station *Si* entspricht der Anzahl von Pufferspeichern, die dem Server *si*(*t*) zu einem bestimmten Zeitpunkt zur Verfügung stehen,
anders gesagt ist die Transitkapazität gleich der Anzahl der sich im zusätzlichen Transit befindlichen Raster, die die Station *Si* zu einem bestimmten Zeitpunkt noch akzeptieren kann,
ein *Transitraster* in einer Station *Si* ist ein Raster, der im Pufferspeicher eingeordnet ist und dem Nutzer *ui*(*t*) zur Verfügung steht,
anders gesagt ist der Raster im Transit ein vollständig empfangener Raster, der auf seine Weitervermittlung wartet oder dessen Weitervermittlung bereits in Gang ist,
. zweitens, jede der Stationen *Si,1* ≦ *i* ≦ *k* zwei Transitkapazitätsschwellen besitzt, die ihr Verhalten in Bezug auf ihre Transitkapazität *Ii*(*t*) bestimmen, und zwar auf folgende Weise :
- die erste Transitkapazitätsschwelle, genannt *Sendeschwelle*, ist auf *mi*(*t*) Pufferspeichern oder Rastern mit *mi*(*t*) ≦ *ni*(*t*) festgelegt, und die Station *Si* befindet sich in offenem Zustand, ohne auf dem Signalweg (*Vs*) ein Signal höherer Ebene auszuspüren, wenn die Transit-kapazität *Ii*(*t*) der Station *Si* höher oder gleich ist mit *mi*(*t*) Pufferspeichern, wobei die Station *Si* einen von ihr gebildeten Raster - genannt *Eigenraster* - mit Höchstlänge oder nicht, sendet; anderenfalls sendet die Station *Si* einen Transitraster,
- die zweite Transitkapazitätsschwelle ist auf 1 Pufferspeicher oder Raster festgelegt, während sich die Station *Si* in offenem Zustand befindet, wenn die Transitkapazität *Ii*(*t*) der Station *Si* an 1 Pufferspeicher absinkt, dann sendet die Station *Si* auf dem Signalweg (*Vs*) ein Signal höherer Ebene auf eine Weise, die es ihr ermöglicht, den eventuell letzten von der vorherigen Station *Si-1* noch gesendeten oder weitergeleiteten Raster zu akzeptieren, bevor diese ihre Sendungen aufschiebt, wobei die Station *Si* dieses Signal höherer Ebene solange beibehält, bis sich ihre Transitkapazität *Ii*(*t*) auf 2 Pufferspeicher erhöht hat; anderenfalls gibt die Station *Si* ein Signal niederer Ebene ab;
- die Sendeschwelle ist auf *mi*(*t*) Pufferspeicher oder Raster mit *mi*(*t*) ≧ 3 festgelegt, sodaß die auf dem Datenweg (*Vd*) eingeschobenen Raster bis zu ihrer Herausnahme von einer Station zur anderen wandern, welches auch ihre Länge oder Adressatentypen sein mögen, und zwar ohne Zwischenblockierung dieser Stationen,
. drittens, jede der Stationen *Si,1* ≦ *i* ≦ *k* fähig ist,
- vom geschlossenen auf den offenen Zustand überzugehen, wenn sie über mindestens einen auf Sendung wartenden Raster verfügt oder wenn sie auf dem Signalweg (*Vs*) ein Signal höherer Ebene aufspürt,
- vom offenen auf den geschlossenen Zustand überzugehen, wenn sie nicht mehr über einen auf Sendung wartenden Raster verfügt und wenn sie auf dem Signalweg (*Vs*) ein Signal niederer Ebene aufspürt,
. viertens, jede der Stationen *Si*, *1* ≦ *i* ≦ *k*, in geschlossenem Zustand, den Bit, genannt zu *zerstörender Raster FD* , des Statusfeldes (*FS*) der gültigen Raster, die nur für sie bestimmt sind, oder die sie gesendet hat, auf 1 verändert, wobei ein Raster mit dem positionierten zu zerstörendem Bit von der ersten Station in offenem Zustand, die ihn empfängt, von dem Datenweg (*Vd*) abgezogen wird.

2. Kommunikationsverfahren nach Anspruch 1, dadurch gekennzeichnet, daß jede der Stationen *Si*,*1* ≦ *i* ≦ *k* in geschlossenem Zustand, die mindestens einen auf Sendung wartenden Raster hat oder die auf dem Signalweg (*Vs*) ein Signal höherer Ebene aufspürt, in offenen Zustand übergeht, und zwar :
. entweder zwischen zwei aufeinanderfolgenden Rasterpassagen,
. oder bei der Bit für Bit erfolgenden Weitervermittlung eines Rasters nach Sendung eines Begrenzers am Rasterende (*ED*) in Folge der Erkennung eines Begrenzers am Rasteranfang (*SD*), wobei die Station *Si* ihre Bit-für-Bit-Weitervermittlung dieses Rasters bei Erkennung des vorgenannten Begrenzers am Rasteranfang (*ED*) unterbricht.

3. Kommunikationsverfahren nach Anspruch 1, dadurch gekenntzeichnet, daß jede der Stationen *Si,1* ≦ *i* ≦ *k* in offenem Zustand, die keine auf Sendung wartenden Raster mehr hat und die auf dem Signalweg (*Vs*) ein Signal niederer Ebene aufspürt, spätestens am Ende des eventuell laufenden Empfangs auf den geschlossenen Zustand übergeht.

4. Kommunikationsverfahren nach Anspruch 1, dadurch gekennzeichnet, daß der Server *si*(*t*) und Nutzer *ui(t*) jeder über einen Kontrollbit (*t*) und einen Statusbit (*d*) verfügen und durch ein drittes Verfahren synchronisiert werden, dessen Funktionen von einer Zustandsübergangsmatrize beschrieben werden, welche Zustandsübergangsmatrize des Server-Nutzer-Paares *C*(*si*(*t*),*ui*(*t*)) über eine sequentielle Schaltung, genannt sequentielle Schaltung *E*(*si*(*t*),*ui*(*t*)) (4), in Betrieb gesetzt wird, und zwar auf folgende Weise :
. erstens positioniert jedes der Server *si*(*t*) und Nutzer *ui*(*t*) Verfahren seinen Kontrollbit (*t*) und geht jedesmal in Schlafstellung, wenn er einen Pufferspeicher gefüllt oder geleert hat, wobei sich dieser Kontrollbit (*t*) aufgrund eines durch seine Schrift ausgelösten Impulses wieder annulliert,
. zweitens und jedes Mal, wenn der Kontrollbit (*t*) des Servers *si*(*t*) und/oder der Kontrollbit (*t*) des Nutzers *ui*(*t*) gemäß der Zustandsübergangsmatrize des Server-Nutzer-Paares *C*(*si*(*t*),*ui*(*t*)) positioniert sind :
- bringt das Synchronisierverfahren die Transitkapazität *Ii*(*t*) auf den neusten Stand und entscheidet über das Wecken des Servers *si*(*t*) und/oder des Nutzers *ui*(*t*), indem es deren Statusbit (*d*) gemäß der neuen Transitkapazität *Ii*(*t*) positioniert,
- positioniert oder annulliert das Synchronisierverfahren einen Statusbit (*e*) in der Station *Si* gemäß der neuen Transitkapazität *Ii*(*t*), wobei dieser Statusbit (*e*) auf diese Weise die Sendung der der Station *Si* eigenen Raster validiert oder für ungültig erklärt,
- positioniert oder annulliert das Synchronisierverfahren mittels des Signalweges (*Vs*) einen Statusbit (*s*) in der vorausgegangenen Station *Si-1* gemäß der neuen Transitkapazität *Ii(t*), wobei dieser Statusbit (*s*) auf diese Weise die Sendungen oder Weitervermittlungen der Raster der vorausgegangenen Station *Si-1* validiert oder für ungültig erklärt ;
. drittens ist jedes der beiden Verfahren Server *si*(*t*) und Nutzer *ui*(*t*) aufweckbar, wenn sein Statusbit (*d*) positioniert ist, wobei dieser Statusbit (*d*) nach Positionierung durch einen Impuls durch Ablesen annulliert wird.

5. Kommunikationsverfahren nach den Ansprüchen 1 und 2, dadurch gekennzeichnet, daß die Übergangsmatrize für die Zustände des Server-Nutzer-Paares *C*(*si*(*t*),*ui*(*t*)) beschreibt, daß :
. erstens, wenn der Server *si*(*t*) seinen Kontrollbit (*t*) positioniert, was einem "Vollpuffer" (*tp*) genannten Ereignis entspricht, die Transitkapazität *Ii*(*t*), ebenfalls laufender Zustand genannt, um eine Einheit absinkt, was folgenden Effekt hat :
- wenn die neue Transitkapazität *Ii*(*t*), ebenfalls "Nachfolgezustand" genannt, gleich Null ist, bleibt der Server *si*(*t*) im Schlafzustand, weil er keinen Pufferspeicher mehr hat,
- wenn die neue Transitkapazität *Ii*(*t*) positiv ist, stellt sich das "Server gefragt" (*sd*) Ereignis ein, was wiederum der Positionierung des Statusbits (*d*) des Servers *si*(*t*) durch das Synchronisierverfahren des Server-Nutzer-Paares *C*(*si*(*t*),*ui*(*t*)) entspricht,
- außerdem, wenn die neue Transitkapazität *Ii*(*t*) gleich *ni*(*t*) - *1* Pufferspeicher ist, stellt sich ebenfalls das "Nutzer gefragt" (*ud*) Ereignis ein, was der Positionierung des Statusbits (*d*) des Nutzers *ui*(*t*) durch das Synchronisierverfahren des Server-Nutzer-Paares *C*((*si*(*t*), *ui*(*t*)) entspricht ;
. zweitens, wenn der Nutzer *ui*(*t*) seinen Kontrollbit (*t*) positioniert, was einem "Puffer leer" (*tv*) genannten Ereignis entspricht, dann steigt die Transitkapazität *Ii*(*t*), ebenfalls "laufender Zustand" genannt, um eine Einheit mit folgendem Effekt an :
- sowie die neue Transitkapazität *Ii*(*t*), ebenfalls "Nachfolgezustand" genannt, gleich *ni*(*t*) Pufferspeichern ist, bleibt der Nutzer *ui*(*t*) im Schlafzustand, weil er keinen Pufferspeicher mehr hat,
- sowie die neue Transitkapazität *Ii*(*t*) unter *ni*(*t*) Pufferspeichern liegt, tritt das "Nutzer gefragt" (*ud*) Ereignis ein, was der Positionierung des Statusbits (*d*) des Nutzers *ui*(*t*) durch das Synchronisierverfahren des Server-Nutzer-Paars *C*(*si*(*t*),*ui*(*t*)) entspricht,
- außerdem, sowie die neue Transitkapazität *Ii*(*t*) gleich 1 Pufferspeicher ist, tritt ebenfalls das "Server gefragt" (*sd*) Ereignis ein, was der Positionierung des Statusbits (*d*) des Servers *si*(*t*) durch das Synchronisierverfahren des Server-Nutzer-Paares *C*(*si*(*t*),*u*,(*t*)) entspricht,
. drittens, wenn der Server *si*(*t*) und der Nutzer *ui*(*t*) gleichzeitig ihren Kontrollbit (*t*) positionieren, was den "Puffer voll" (*tp*) und "Puffer leer" (*tv*) genannten Ereignissen entspricht, bleibt die ebenfalls "laufender Zustand" genannte Transitkapazität *Ii*(*t*) gleich, und zwar mit dem Effekt, daß die "Server gefragt" (*sd*) und "Nutzer gefragt" (*ud*) Ereignisse sich gleichzeitig einschalten, was jeweils der Positionierung des Statusbits (*d*) des Servers *si*(*t*) und der Positionierung des Statusbits (*d*) des Nutzers *ui*(*t*) durch das Synchronisierverfahren des Server-Nutzer-Paars *C*(*si*(*t*),*ui*(*t*)) entspricht ;
. viertens, wenn das Synchronisierverfahren des Server-Nutzer-Paares *C*(*si*(*t*),*ui*(*t*)) eingeleitet ist, ist die ebenfalls "laufender Zustand" genannte Transitkapazität *Ii*(*t*) gleich *ni*(*t*) Pufferspeicher und das "Server gefragt" (*sd*) genannte Ereignis schaltet sich ein, was der Positionierung des Statusbits (*d*) des Servers *si*(*t*) durch das Synchronisierverfahren des Server-Nutzer-Paars *C*(*si*(*t*),*ui*(*t*)) entspricht.

6. Kommunikationsverfahren nach den Ansprüchen 1 und 2, dadurch gekennzeichnet, daß die Zustandsübergangsmatrize des Server-Nutzer-Paars *C*(*si*(*t*),*ui*(*t*)) darüber hinaus für jede Änderung der Transitkapazität *Ii*(*t*) oder des Zustandübergangs vorschreibt, daß :
. erstens, wenn die neue und ebenfalls Nachfolgezustand genannte Transitkapazität *Ii*(*t*) höher oder gleich der Schwelle der Transitkapazität von *mi*(*t*) Pufferspeicher mit *mi*(*t*) ≧ 3 ist, wird die Binärvariable (*ve*₄₈) annulliert, um zu übersetzen, daß die Sendungen der der Station *Si* eigenen Raster validiert sind, was einer Annullierung des Statusbits (*e*) durch das Synchronisierverfahren des Server-Nutzer-Paares *C*(*si*(*t*),*ui*(*t*)) entspricht, anderenfalls sich die Binärvariable (*ve*₄₈) positioniert, um zu übersetzen, daß die Sendungen der der Station *Si* eigenen Raster ungültig sind, was einer Positionierung des Statusbits (*e*) durch das Synchronisierverfahren des Server-Nutzer-Paares *C*(*si*(*t*),*ui*(*t*)) entspricht ;
. zweitens, wenn die neue ebenfalls Nachfolgezustand genannte Transitkapazität *Ii*(*t*) höher oder gleich der Schwelle der Transitkapazität von 2 Pufferspeichern ist, annulliert sich die Binärvariable (*vp*₄₇), um zu übersetzen, daß die Sendungen und Weitervermittlungen der der vorherigen Station *Si-1* eigenen Raster validiert sind, was einer Annullierung des Statusbits (*p*) der Station *Si* und der Sendung auf dem Signalweg (*Vs*) eines Signals niederer Ebene durch das Synchronisierverfahren des Server-Nutzer-Paares *C*(*si*(*t*),*ui*(*t*)) entspricht, wobei das Signal niederer Ebene den Statusbit (*s*) der vorherigen Station *Si-1* annulliert, anderenfalls sich die Binärvariable (*vp*₄₇) positioniert, um zu übersetzen, daß die Sendungen und Weitervermittlungen der der vorherigen Station *Si-1* eigenen Raster für ungültig erklärt wurden, was einer Positionierung des Statusbits (*p*) der Station *Si* und einer Sendung auf dem Signalweg (*Vs*) eines Signals höherer Ebene durch das Synchronisierverfahren des Server-Nutzer-Paares *C*(*si*(*t*),*ui*(*t*)) entspricht, welches Signal höherer Ebene den Statusbit (*s*) der vorherigen Station *Si-1* positioniert.

7. Lokales Kommunikationsnetz mit Mehrfachzugang durch verteilte Regulation des Verkehrs mit Umsetzung des Kommunikationsverfahrens nach den Ansprüchen 1 bis 6, bestehend aus *k* Stationen *k* ≧ 2, Sende- und/oder Empfangsstationen, welche Stationen untereinander in Serie durch einen Datenübertragungsweg (*Vd*) und einen Signalisationsweg (*V*s), jeder in eigener und gegengesetzter Richtung verlaufend, verbunden sind und somit einen Kreis von *k* Stationen bilden, dadurch gekennzeichnet, daß jede der Stationen *Si,1* ≦ *i* ≦ *k* folgendes beinhaltet :
. die ersten Empfangs- und Weitervermittlungsmittel mit Einsatz des Server-Verfahrens *si*(*t*) und des Nutzer-Verfahrens *ui*(*t*), wobei sie sich *ni*(*t*) Pufferspeicher mit *ni*(*t*) ≧ 3 teilen können, sodaß wenn sich die Station *Si* in offenem Zustand befindet, diese Verfahren die sich in Transit befindlichen Raster empfangen und weiterleiten ;
. die zweiten Synchronisiermittel, die das Server-Verfahren *si*(*t*) und das Nutzer-Verfahren *ui*(*t*) in Bezug auf die Transitkapazität *Ii*(*t*) der Station *Si* synchronisieren und diese Transitkapazität mit den beiden Transitkapazitätsschwellen der Station *Si* vergleichen, um bei offenem Zustand der Station *Si* folgendes zu erreichen :
- einerseits ermöglichen es die obigen Mittel der Station *Si* auf dem Datenweg (*Vd*) einen eigenen Raster zu senden, wenn ihre Transitkapazität *Ii*(*t*) höher oder gleich der ersten auf *mi*(*t*) Pufferspeicher mit 3 ≦*mi*(*t*)≦*ni*(*t*) festgelegten Schwelle der Transitkapazität ist; anderenfalls ermöglichen es diese Mittel der Station *Si*, einen sich in Transit befindlichen Raster zu senden, welcher Transitraster wiederum über das Nutzer-Verfahren *ui*(*t*) weitergeleitet wird;
- andererseits senden diese Mittel auf dem Signalweg (*Vs*) ein Signal höherer Ebene, wenn die Transitkapazität *Ii*(*t*) der Station *Si* niedriger oder gleich der zweiten Schwelle der auf einen Pufferspeicher festgelegten Transitkapazität ist; anderenfalls senden diese Mittel ein Signal niedriger Ebene;
. die dritten Kommuniktionsmittel zur Umsetzung von Änderungen im Einschubzustand der Station *Si*, und zwar :
- befindet sich die Station *Si* in geschlossenem Zustand, ermöglichen es diese Mittel der Station *Si*, auf den offenen Zustand überzugehen, wenn sie über mindestens einen auf Sendung wartenden Raster verfügt oder wenn sie auf dem Signalweg (*Vs*) ein Signal höherer Ebene aufspürt, das von der nächsten Station *Si+1* kommt,
- befindet sich die Station *Si* in offenem Zustand, ermöglichen es diese Mittel der Station *Si*, auf den geschlossenen Zustand überzugehen, wenn sie nicht mehr über auf Sendung wartende Raster verfügt und wenn sie auf dem Signalweg (*Vs*) ein Signal niederer Ebene aufspürt, das von der nächsten Station *Si+1* kommt.

8. Lokales Kommunikationsnetz nach Anspruch 7, dadurch gekennzeichnet, daß die ersten Mittel, genannt Empfangs- und Weitervermittlungsmittel einer Station *Si,1* ≦*i* ≦ *k*, folgendes beinhalten :
. einen Prozessor *Prt* (52), in dem sich das Server-Verfahren *si*(*t*) abspielt, wobei dieser Prozessor *Prt* (52) über einen Statusbit (*d*) und einen Kontrollbit (*t*) für das genannte Server-Verfahren verfügt;
. einen Prozessor *Pet* (53), in dem sich das Nutzer-Verfahren *ui*(*t*) abspielt, wobei dieser Prozessor *Pet* (53) über einen Statusbit (*d*) und einen Kontrollbit (*t*) für das genannte Nutzer-Verfahren verfügt und darüber hinaus die drei Statusbits (*e*), (*s*) und (*p*) beinhaltet;
. einen Speicher (*M*) mit Mehrfachzugang, der *ni*(*t*) Pufferspeicher mit *ni*(*t*) ≧ 3 akzeptiert;
. einen Kommunikationskoppler (*I*).

9. Lokales Kommunikationsnetz nach Anspruch 7, dadurch gekennzeichnet, daß die zweiten Mittel, genannt die Synchronisiermittel einer Station *Si,1* ≦ *i* ≦ *k*, aus einer sequentiellen Schaltung *E* (*si*(*t*),*ui*(*t*)) (4) bestehen, die die Funktionen übernimmt, die von der Zustandsübergangsmatrize des Server-Nutzer-Paares *C*(*si*(*t*),*ui*(*t*)) beschrieben werden, wobei diese sequentielle Schaltung folgendes beinhaltet :
. einen Initialisiereingang (40)
. einen Eingang (41), der die von der Positionierung des Kontrolbits (*t*) des Servers *si*(*t*) verursachten Impulse empfängt,
. einen Eingang (42), der die von der Positionierung des Kontrolbits (t) des Nutzers *ui*(*t*) verursachten Impulse empfängt,
. einen Eingang (43), der die Impulse liefert, die den Statusbit (*d*) des Servers *si*(*t*) positionieren, um sein Wecken zu verursachen,
. einen Eingang (44), der die Impulse liefert, die den Statusbit (*d*) des Nutzers *ui*(*t*) positionieren, um sein Wecken zu verursachen,
. einen Ausgang (45) für die Lieferung der Signale, die die Änderungen des Einschubzustandes der Station *Si* verursachen,
. einen Ausgang (47), der auf dem Signalweg (*Vs*) ein Signal höherer Ebene abgibt, solange die Transitkapazität *Ii*(*t*) der Station *Si* niedriger oder gleich der zweiten Schwelle der Transitkapazität ist, die auf einen Pufferspeicher festgelegt wurde, oder der im gegenteiligen Fall ein Signal niedriger Ebene abgibt, wobei dieses Signal höherer Ebene den Statusbit (*p*) der Station *Si* und den Statusbit (*s*) der vorherigen Station *Si-1* positioniert, um die Ungültigkeit der Sendungen und Weitervermittlungen der Station *Si-1* zu speichern, und wobei das Signal niedriger Ebene diese Statusbits annulliert, um die Validation der Sendungen und Weitervermittlungen der Station *Si-1* zu speichern,
. einen Ausgang (48), der das Signal niedriger Ebene liefert, solange die Transitkapazität *Ii*(*t*) der Station *Si* höher oder gleich der ersten Schwelle der Transitkapazität ist, die auf *mi*(*t*) Pufferspeicher mit 3 ≦ *mi*(*t*) ≦ *ni*(*t*) festgelegt wurde, oder der im gegenteiligen Fall ein Signal höherer Ebene liefert, wobei dieses Signal niedriger Ebene den Statusbit (*e*) der Station *Si* annulliert, um die Sendung eines eigenen Rasters zu validieren, und wobei dieses Signal höherer Ebene den Statusbit (*e*) positioniert, um die Sendung der eigenen Raster ungültig zu machen.

10. Ein lokales Kommunikationsnetz nach Anspruch 7, dadurch gekennzeichnet, daß die dritten Mittel, genannt die Kommunikationsmittel, einer Station *Si* ,*1* ≦ *i* ≦ *k* folgendes beinhalten :
. einen Prozessor *Prt* (52), in dem sich das Server-Verfahren *si*(*t*) abspielt, wobei dieser Prozessor *Prt* (52) über einen Statusbit (*f*) verfügt,
. einen Prozessor *Pet* (53), in dem sich das Nutzer-Verfahren *ui*(*t*) abspielt, wobei dieser Prozessor *Pet* (53) über einen Statusbit (*f*) verfügt,
. einen Kommunikationskoppler (*I*) mit einem Eingang (71) und einem Ausgang (72),
zu folgendem Zweck :
. einerseits, wenn die Station *Si* in geschlossenem Zustand eine der Bedingungen für den Übergang in den offenen Zustand erfüllt, wird am Eingang (71) des Kommunikationskopplers (*I*) ein Signal höherer Ebene geliefert, sodaß die Station *Si* in den offenen Zustand übergeht, sobald die Empfangslogik des Kommunikationskopplers (*I*) inaktiv ist, oder sobald er einen Begrenzer am Rasterende (*ED*) infolge der Erkennung eines Begrenzers am Rasteranfang (*SD*) gesendet hat, wobei der Kommunikationskoppler in offenem Zustand auf seinem Ausgang (72) ein Signal niedriger Ebene abgibt, das den Statusbit (*f*) des Prozessors *Prt* (52) und den Statusbit (*f*) des Prozessors *Pet* (53) der Station *Si* annulliert, um den Übergang der Station *Si* in den offenen Zustand zu speichern;
. andererseits, wenn die Station *Si* in offenem Zustand alle Bedingungen für einen Übergang in den geschlossenen Zustand erfüllt, wird ein Signal niedriger Ebene am Eingang (71) des Kommunikationskopplers (*I*) geliefert, damit die Station *Si* in den geschlossenen Zustand übergeht, sobald die Empfangslogik des Kommunikationskopplers (*I*) inaktiv ist, wobei dieser Kommunikationskoppler in geschlossenem Zustand an seinem Ausgang (72) ein Signal höherer Ebene liefert, das den Statusbit (*f*) des Prozessors *Prt* (52) und den Statusbit (*f*) des Prozessors *Pet* (53) der Station *Si* annulliert, um den Übergang der Station *Si* in den geschlossenen Zustand zu speichern.
